# EUROPÄISCHE PATENTANMELDUNG

(11) **EP 3 620 330 A1**
(43) Veröffentlichungstag der Anmeldung: **11.03.2020**
(21) Anmeldenummer: 18193250.0
(22) Anmeldetag: 07.09.2018
(51) Int. Cl.: B60Q 3/80, B60Q 1/00

(54) **VERFAHREN ZUR STEUERUNG VON LICHTFUNKTIONEN EINER FAHRZEUGLEUCHTE, VORRICHTUNG MIT EINER SOLCHEN FAHRZEUGLEUCHTE SOWIE COMPUTERPROGRAMMPRODUKT ZUR DURCHFÜHRUNG DES VERFAHRENS**

(71) Anmelder: odelo GmbH, 70329 Stuttgart (DE)
(72) Erfinder: VOLLMER, Marco, 73728 Esslingen am Neckar (DE); WILD, Julian, 70180 Stuttgart (DE)
(74) Vertreter: Benninger, Johannes

(57) **Zusammenfassung**

Es werden ein Verfahren zur veränderlichen Steuerung wenigstens einer Lichtfunktion (5) einer Fahrzeugleuchte (4) mit wenigstens einem eine oder mehrere Lichtquellen umfassenden, zur Verwirklichung zumindest einer Lichtfunktion der Fahrzeugleuchte vorgesehenen Leuchtmittel, eine zur Durchführung des Verfahrens geeignete Vorrichtung sowie ein die Vorrichtung zur Ausführung des Verfahrens veranlassendes Computerprogrammprodukt beschrieben. Das Verfahren umfasst die Verfahrensschritte:
- Wiedergabe einer virtuellen Benutzerschnittstelle (6) auf einem Bildschirm (2) einer Eingabeeinheit (3),
- visuelle Darstellung von mindestens zwei verschieden Steuerungsvorgaben für wenigstens eine Lichtfunktion (5) der Fahrzeugleuchte (4) innerhalb der Wiedergabe der Benutzerschnittstelle (6) auf dem Bildschirm (2), wobei die verschiedenen Steuerungsvorgaben unterschiedliche Voreinstellungen für jeweils einen oder mehrere unterschiedliche Parameter aufweisen und sich in mindestens einem solchen Parameter voneinander unterscheiden,
- Auswahl einer der dargestellten Steuerungsvorgaben für zumindest eine Lichtfunktion durch Betätigung mindestens eines virtuellen, auf dem Bildschirm dargestellten Schalters (7),
- Übertragung zumindest der durch die jeweilige ausgewählte Steuerungsvorgabe festgelegten Parameter von der Eingabeeinheit (3) an die Fahrzeugleuchte (4),
- Zumindest zeitweilige Speicherung der übertragenen, durch die Auswahl einer Steuerungsvorgabe für eine Lichtfunktion festgelegten Parameter in einer Steuerungseinheit der Fahrzeugleuchte (4), und
- Abrufen der übernommenen, gespeicherten Parameter beim Aktivieren der jeweiligen Lichtfunktion (5),
und/oder
- Aktivierung der jeweiligen Lichtfunktion (5) entsprechend der übernommenen, gespeicherten Parameter bei Vorliegen von den übernommenen, gespeicherten Parametern entsprechenden Voraussetzungen.

## Beschreibung

Die Erfindung betrifft ein Verfahren zur veränderlichen Steuerung von Lichtfunktionen einer Fahrzeugleuchte gemäß dem Oberbegriff des Anspruchs 1, eine zur Durchführung eines solchen Verfahrens geeignete Vorrichtung gemäß dem Oberbegriff des Anspruchs 12, umfassend eine Fahrzeugleuchte mit veränderlich steuerbaren Lichtfunktionen, sowie ein Computerprogrammprodukt gemäß dem Oberbegriff des Anspruchs 15, welches eine Vorrichtung umfassend eine Fahrzeugleuchte mit veränderlich steuerbaren Lichtfunktionen zur Ausführung eines Verfahrens zur veränderlichen Steuerung deren Lichtfunktionen veranlasst.

Jede Fahrzeugleuchte, insbesondere Automobilleuchte, erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Um die Wahrnehmbarkeit beziehungsweise Wahrnehmungskraft von Lichtfunktionen einer Fahrzeugleuchte für andere Verkehrsteilnehmer zu erhöhen ist bekannt, diese innerhalb der gesetzlich zugelassenen Grenzen aufleben zu lassen.

Ein bekanntes Beispiel sind so genannte dynamische Lichtfunktionen, bei denen die vom Gesetzgeber eingeräumte Zeit, die eine Glühlampe als eine gesetzlich erlaubte Lichtquelle eines zur Erfüllung einer Lichtfunktion vorgesehenen Leuchtmittels benötigt, um ihre volle Leuchtstärke zu erreichen, genutzt wird, um einen visuellen Effekt zu erzielen.

Ein Beispiel eines solchen visuellen Effekts ist das Wischen in Richtung einer beabsichtigten Fahrtrichtungsänderung bei einer durch mehrere nebeneinander angeordnete und individuell nacheinander der Reihe nach angehend ansteuerbare Halbleiterlichtquellen verwirklichten Wiederholblinklichtfunktion eines Fahrtrichtungsanzeigers.

Dabei werden innerhalb der ersten 200 ms des Aufleuchtens durch die individuell ansteuerbare Halbleiterlichtquellen gebildete einzelne Segmente der der Lichtfunktion zugeordneten Leuchtfläche von der Fahrzeugmitte Richtung außen nacheinander aktiviert, so dass optisch eine Wischbewegung beim Einschalten entsteht.

Der Grund für den Einsatz von Halbleiterlichtquellen, wie etwa LEDs (anorganische Leuchtdioden) und/oder OLEDs (organische Leuchtdioden) in Verbindung mit dynamischen Lichtfunktionen liegt im Wesentlichen in deren kurzer, kaum messbarer Aktivierungszeit vom Beginn einer Strombeaufschlagung bis zur Abstrahlung von Licht. Dabei erfolgt die Lichtabstrahlung im Gegensatz zu einer Glühlampe quasi vom ersten Augenblick der Strombeaufschlagung an mit voller, der Stromstärke proportionaler Leuchtstärke.

Eine Möglichkeit, Probanden und Interessenten den Unterschied und hiermit die verbesserte Wahrnehmbarkeit zwischen einer herkömmlichen und einer dynamischen Lichtfunktion an ein und dem selben Fahrzeugmodell und/oder an ein und derselben Fahrzeugleuchte zu demonstrieren, besteht bislang nicht.

Ein Trend in der Beleuchtungstechnik ist die Individualisierbarkeit der Beleuchtung hinsichtlich Farbe und/oder Farbtemperatur, Helligkeit und Animationsmöglichkeiten. In der Allgemeinbeleuchtung gibt es hierfür verschiedene Lichtlösungen von unterschiedlichen Anbietern.

Die so genannten smarten LED-Lichtsysteme sind steuerbar über auf Smartphones, Tablets oder Computer, einschließlich Laptop installierbare Applikationen, kurz Apps, Schalter und Sprache.

Für die Funkkommunikation zwischen App und/oder Schaltern und den Leuchten wird von den großen Anbietern das ZigBee-System als eine solide Funkbasis für ein vernetztes Heim eingesetzt.

Auch in Automobilen lassen sich die Farben und Helligkeiten der Innenraumbeleuchtungen zwischenzeitlich beispielsweise mittels RGB-LEDs über ein integriertes Display, beispielsweise in ein Navigationsdisplay integriert, und/oder Schalter einstellen. Die Ansteuerung der Leuchten erfolgt hierbei kabelgebunden.

Ein weiterer Trend ist, dass immer mehr Menschen über ihre mobilen Geräte Informationen einholen und Bereiche Ihres Lebens analysieren, steuern und/oder beeinflussen möchten.

Darüber hinaus besteht durch einen fortschreitenden Bedürfniswandel der Gesellschaft nach Individualisierung ein Bedarf nach sichtbarer individueller Interaktion mit Gegenständen.

Außerdem schafft die zunehmende Elektrifizierung des Individualverkehrs ein zunehmendes Bedürfnis einer Bereitstellung visueller Zustandsinformationen. Als Beispiel sei hier der Wunsch nach einer vorzugsweise bereits vor dem Einstieg in ein Elektrofahrzeug verfügbaren Information über dessen Fahrbereitschaft, etwa des Ladezustands der Fahrbatterie oder der verfügbaren Reichweite genannt.

Zu guter Letzt wandelt sich das Bild der individuellen Mobilität in der Gesellschaft weg von reinen Fahrmaschinen hin zu autonomen Begleitern, wobei nicht Fahrleistungen, sondern Erscheinung, Design, Umweltverträglichkeit und Zusatznutzen im Vordergrund stehen.

Eine indirekte Schnittstelle von Anwender zur Automobilleuchte ist in heutigen Fahrzeugen teilweise bereits vorhanden. Dabei findet der Daten- und Informationsaustausch über die Fahrzeugkommunikation und das Fahrzeugsteuergerät statt.

Die Schnittstelle zwischen Automobilleuchte und Fahrzeugsteuergerät kann dabei über einen LIN-Bus oder CAN-Bus oder ähnliches realisiert werden. Des Weiteren besteht die Schnittstelle zwischen Fahrzeug und Anwender entweder im integrierten Fahrzeugdisplay oder einer Funkschnittstelle mit einem mobilen Endgerät (Smartphone, Tablet) und einer installierten OEM-App, meist mit einem Bluetooth- oder WLAN-Standard.

Diese indirekte Verbindung schränkt jedoch die Freiheiten bei der Interaktion mit der Leuchte ein, ebenfalls ist die Möglichkeit der Individualisierung der Leuchtenfunktion und -animation innerhalb des gesetzlich Zulässigen begrenzt.

Eine Aufgabe der Erfindung ist es, ein Verfahren zur individuellen, veränderlichen Steuerung von Lichtfunktionen einer Fahrzeugleuchte, eine zur Umsetzung eines solchen Verfahrens geeignete, eine Fahrzeugleuchte mit individuell steuerbaren Lichtfunktionen umfassende Vorrichtung, sowie ein Computerprogrammprodukt anzugeben, welches eine Vorrichtung umfassend eine Fahrzeugleuchte mit veränderlich steuerbaren Lichtfunktionen zur Ausführung eines Verfahrens zur veränderlichen Steuerung deren Lichtfunktionen veranlasst, und welche genannten Gegenstände der Erfindung sich verändernde Bedürfnisse einschließlich Demonstrationszwecken zu erfüllen in der Lage sind.

Die Aufgabe wird jeweils durch die Merkmale der unabhängigen Ansprüche gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Ein erster Gegenstand der Erfindung betrifft demnach ein Verfahren zur veränderlichen Steuerung einer oder vorzugsweise mehrerer Lichtfunktionen einer Fahrzeugleuchte.

Das Verfahren ist besonders bevorzugt zur Ausführung an einer ruhenden Fahrzeugleuchte vorgesehen. Dementsprechend nimmt ein mit einer entsprechenden Fahrzeugleuchte ausgestattetes Fahrzeug bevorzugt nicht am fließenden Verkehr teil.

Das Verfahren sieht vor, eine virtuelle Benutzerschnittstelle auf einem Bildschirm einer zusätzlich zu dem Bildschirm Speichermittel und Mikroprozessor umfassenden Eingabeeinheit wiederzugeben, welche eine Auswahl von mindestens zwei verschieden Steuerungsvorgaben wenigstens einer Lichtfunktion visuell darstellt.

Wichtig ist an dieser Stelle hervorzuheben, dass der Begriff Mikroprozessor im vorliegenden Dokument stellvertretend ist für einen Computerprozessor oder eine Rechnereinheit.

Die verschiedenen Steuerungsvorgaben können Voreinstellungen eines oder mehrerer Parameter für ein eine oder mehrere Lichtquellen umfassendes, zur Verwirklichung einer Lichtfunktion der Fahrzeugleuchte vorgesehenes Leuchtmittel umfassen und/oder die Vornahme von Voreinstellungen eines oder mehrerer solcher Parameter erlauben.

Ohne Anspruch auf Vollständigkeit der nachfolgenden Aufzählung kann es sich bei den Parametern um Leuchtdauer, Leuchtstärke, Leuchtfarbe, Farbtemperatur, Wiederholfrequenz, Wiederholungsanzahl, Einschaltverzögerung dessen einzelner, individuell ansteuerbarer Lichtquellen und/oder einer oder mehreren Gruppen von zur Verwirklichung einer gemeinsamen Lichtfunktion vorgesehenen Lichtquellen oder eine oder mehrere Kombination hiervon umfassen. Beispielsweise kann in Verbindung mit einem zur Erfüllung einer Lichtfunktion vorgesehenen Leuchtmittel mit mehreren, beispielsweise Licht in verschiedenen Grundfarben abstrahlenden, individuell ansteuerbaren Lichtquellen durch individuelle Einflussnahme beispielsweise auf die Leuchtstärken der Lichtquellen vorgebende Parameter auf die Farbtemperartur der Lichtfarbe der Lichtfunktion Einfluss genommen werden. Auch eine Verknüpfung mit einem Signal und/oder die Empfindlichkeit einer solchen Verknüpfung können alternativ oder zusätzlich von den Steuerungsvorgaben als Parameter umfasst sein. Ein entsprechendes Beispiel ist eine Verknüpfung mit einem Tonsignal, etwa einem einer Musikwiedergabe dienenden Tonsignal, beispielsweise wie bei einer Lichtorgel.

Das Verfahren sieht weiterhin vor, eine Auswahl jeweils einer Steuerungsvorgabe für zumindest eine Lichtfunktion zu treffen. Die Auswahl erfolgt durch Betätigung eines virtuellen, auf dem Bildschirm dargestellten Schalters. Die Betätigung kann beispielsweise durch Mausklick oder ähnliches oder etwa bei einem berührungsempfindlichen Bildschirm durch Fingertippen erfolgen.

Dabei kann das Verfahren vorsehen, zumindest eine Steuerungsvorgabe bereitzuhalten, welche eine individuelle Festlegung eines oder mehrerer der beispielsweise oben genannten Parameter vorzunehmen erlaubt.

Eine solche Steuerungsvorgabe kann beispielsweise auf dem durch sie zugänglichen Bildschirminhalt virtuelle Schalter und/oder virtuelle Schieberegler umfassen, die es erlauben, einen oder mehrere beispielsweise auswählbare Parameter innerhalb der Steuerungsvorgabe kontinuierlich oder in diskreten Schritten zu ändern und entsprechend innerhalb der Steuerungsvorgabe geändert beizubehalten beziehungsweise festzulegen, beispielsweise um die Lichtfarbe kontinuierlich, oder um sie in Farbstufen zu ändern, oder um einen Blinktakt festzulegen, oder um eine dynamische Lichtfunktion zu generieren, etwa durch in einer Reihe von individuell ansteuerbaren Lichtquellen von einer zur anderen Seite hin zunehmende Einschaltverzögerungen. Ebenfalls denkbar ist eine durch ein Leuchtmittel mit mehreren individuell ansteuerbaren Lichtquellen oder durch mehrere Lichtquellen mehrerer individuell ansteuerbarer Leuchtmittel dynamische Lichtfunktion mit beispielsweise vom Inneren einer Leuchtfläche, beispielsweise deren Leuchtflächenschwerpunkt, nach außen zum Rand der Leuchtfläche hin oder umgekehrt von außen nach innen hin zunehmender Einschaltverzögerung der jeweils aufleuchtenden Lichtquellen. Durch abwechselnde von innen nach außen und von außen nach innen zunehmende Einschaltverzögerungen lässt sich durch kontinuierliche Ausführung der Lichtfunktion ein hin- und hergehender optischer Effekt ähnlich in einer Schüssel schwappenden Wassers erzielen.

Grundsätzlich können verschiedene Steuerungsvorgaben unterschiedliche Lichtfunktionen der Fahrzeugleuchte betreffen.

Durch die Auswahl einer Steuerungsvorgabe für eine Lichtfunktion werden die durch die jeweilige Steuerungsvorgabe festgelegten Parameter als Einstellung für die jeweilige Lichtfunktion übernommen.

Im nächsten Verfahrensschritt sieht das Verfahren vor, zumindest die übernommenen, durch die Auswahl einer Steuerungsvorgabe für eine Lichtfunktion festgelegten Parameter von der Eingabeeinheit an die Fahrzeugleuchte zu übertragen.

Vorzugsweise erfolgt die Übertragung von der Eingabeeinheit an die Fahrzeugleuchte drahtlos, beispielsweise per Funk. Die Übertragung kann sich eines Übertragungsstandards für drahtlose Kommunikation bedienen, wie etwa Bluetooth.

In einem darauffolgenden Verfahrensschritt werden die von der Eingabeeinheit an die Fahrzeugleuchte übertragenen, durch die Auswahl einer Steuerungsvorgabe für eine Lichtfunktion festgelegten Parameter in einer Speichermittel und Mikroprozessor umfassenden Steuerungseinheit zumindest zeitweilig gespeichert.

In einem anschließenden Verfahrensschritt werden die als Einstellung für die jeweilige Lichtfunktion übernommenen, gespeicherten Parameter beim Aktivieren der jeweiligen Lichtfunktion abgerufen und/oder es erfolgt eine entsprechend den Einstellungen vorgenommene Aktivierung der jeweiligen Lichtfunktion bei Vorliegen der den Einstellungen entsprechenden Voraussetzungen.

Ersteres ist beispielsweise dann der Fall, wenn an der Benutzerschnittstelle eine bestimmte Lichtfunktion oder dynamische Wiedergabe einer Lichtfunktion oder eine entsprechende Abfolge von Lichtfunktionen oder Wiedergaben beispielsweise für eine Begrüßungssequenz etwa beim Aufschließen und/oder Öffnen eines Fahrzeugs festgelegt wurde und ein entsprechendes auslösendes Ereignis die Lichtfunktion dann aktiviert, wie etwa das Aufschließen und/oder Öffnen des Fahrzeugs.

Letzteres kann beispielsweise dann der Fall sein, wenn die Steuerungsvorgabe eine einmalige oder mehrfache, beispielsweise permanente Wiederholung einer oder mehrerer Lichtfunktionen vorsieht, beispielsweise zu Demonstrationszwecken.

Letzteres kann außerdem der Fall sein, wenn die Steuerungsvorgabe, deren Parameter als Einstellung für die jeweilige Lichtfunktion gespeichert und übernommenen worden sind, beispielsweise eine Verknüpfung mit einem Signal vorsieht, und ein entsprechendes Signal auftritt, wie etwa bei einer Lichtorgel.

Darüber hinaus sind Kombinationen denkbar, wobei ein erstes auslösendes Ereignis eine Folge von Lichtfunktionen nach sich zieht, die jeweils auslösendes Ereignis für die darauffolgende Lichtfunktion sein können.

Die Steuerungseinheit ist mit den Leuchtmitteln der Fahrzeugleuchte derart verbunden, dass sie die zur Erfüllung einer oder mehrerer Lichtfunktionen der Fahrzeugleuchte vorgesehenen Lichtquellen zumindest eines Leuchtmittels der Fahrzeugleuchte:
- zur Übernahme der durch die jeweilige Steuerungsvorgabe festgelegten Parameter gebildeten Einstellungen bei Aktivierung mindestens einer entsprechenden Lichtfunktion veranlasst, und/oder
- zur Aktivierung mindestens einer entsprechenden Lichtfunktion entsprechend der durch die jeweilige Steuerungsvorgabe festgelegten Parameter gebildeten Einstellungen veranlasst.

Durch die fahrzeugleuchtenseitige Speicherung einer Steuerungsvorgabe für eine Lichtfunktion werden die durch die jeweilige Steuerungsvorgabe festgelegten Parameter als Einstellung für die jeweilige Lichtfunktion bei jeder Aktivierung der entsprechenden Lichtfunktion abgerufen und oder die jeweilige Lichtfunktion entsprechend der Einstellung aktiviert.

Mit anderen Worten werden die Einstellungen zumindest beim Aktivieren der jeweiligen Lichtfunktion abgerufen oder umfassen eine entsprechend den Einstellungen vorgenommene Aktivierung der jeweiligen Lichtfunktion.

Das Verfahren kann anschließend wieder von Vorn beginnen, indem beispielsweise eine andere Steuerungsvorgabe an der Benutzerschnittstelle ausgewählt und zur Fahrzeugleuchte übertragen wird und/oder ein oder mehrere Parameter einer Steuerungsvorgabe an der Benutzerschnittstelle geändert und zur Fahrzeugleuchte übertragen werden.

Wichtig ist hervorzuheben, dass das Verfahren die Übertragung eines Computerprogrammprodukts zumindest auf die Eingabeeinheit vorsehen kann, welches in den Speichermitteln zumindest der Eingabeeinheit abgelegt zumindest den Mikroprozessor der Eingabeeinheit zur Ausführung eines oder mehrerer der beschriebenen Verfahrensschritte des Verfahrens veranlassen kann, einschließlich der Darstellung der virtuellen Benutzerschnittstelle auf dem Bildschirm der Eingabeeinheit.

Um die Gesetzgebung einzuhalten ist das auch als eine Fernsteuerung der als Automobilleuchte ausgeführten Fahrzeugleuchte bezeichenbare Verfahren bevorzugt nur im Aus-Zustand des Fahrzeuges, insbesondere nur bei stehendem, nicht am fließenden Verkehr teilnehmendem Fahrzeug ausführbar. Hierzu kann das Verfahren eine Abfrage eines Fahrzustands eines mit der Fahrzeugleuchte ausgestatteten Fahrzeugs vorsehen. Dies kann beispielsweise durch eine Abfrage eines die Lichtfunktionen im Fahrbetrieb ansteuernden, fahrzeugeigenen Steuergeräts erfolgen. Hierzu kann eine Verbindung der Steuerungseinheit mit dem Steuergerät und/oder mit einem mit dem Steuergerät in Verbindung stehenden Fahrzeugbussystem vorgesehen sein, wie etwa LIN-Bus.

Das auch als LIN-Bus bezeichnete Local Interconnect Network (LIN), ist ein als serielles Kommunikationssystem dienender Feldbus.

Ein zweiter Gegenstand der Erfindung betrifft eine zur Ausführung eines voranstehenden Verfahrens geeignete Vorrichtung.

Die Vorrichtung umfasst eine Bildschirm, Speichermittel und eine kurz auch als Mikroprozessor bezeichnete Recheneinheit umfassende Eingabeeinheit sowie eine Fahrzeugleuchte mit einer Speichermittel und eine ebenfalls kurz auch als Mikroprozessor bezeichnete Recheneinheit umfassenden Steuerungseinheit.

Die Vorrichtung umfasst darüber hinaus eine Sende- und Empfangseinrichtung zumindest zur drahtlosen Übertragung von Steuerungsvorgaben von der Eingabeeinheit an die Steuerungseinheit der Fahrzeugleuchte.

Die Sende- und Empfangseinrichtung bedient sich bevorzugt einer Funkstrecke zur Übertragung von Steuerungsvorgaben.

Die Übertragung kann sich eines Übertragungsstandards für drahtlose Kommunikation bedienen, wie etwa Bluetooth.

Vorzugsweise ist die Sende- und Empfangseinrichtung zur Übertragung von Computerprogrammprodukten geeignet, welche in den Speichermitteln der Vorrichtung gespeichert die Mikroprozessoren der Vorrichtung zur Ausführung eines voranstehend beschriebenen Verfahrens durch die Vorrichtung veranlassen.

Beispielsweise kann es sich bei der Eingabeeinheit um ein Mobiltelefon, insbesondere ein Smartphone oder um einen tragbaren Computer, wie etwa um ein Tablet oder ein Laptop, oder um einen Arbeitsplatzcomputer handeln, die mit dem Internet verbindbar sein können.

Alternativ oder zusätzlich kann es sich bei der Eingabeeinheit um eine integrierte Einheit am Fahrzeugschlüssel oder eine separate Fernbedienung, beispielsweise ähnlich einer Fernbedienung für eine Standheizung, handeln.

Speichermittel und Mikroprozessor der Eingabeeinheit sind geeignet, eine virtuelle Benutzerschnittstelle auf dem Bildschirm der Eingabeeinheit darzustellen, welche eine Auswahl einer Steuerungsvorgabe und/oder die Veränderung eines oder mehrerer der zum Verfahren beispielhaft erwähnten Parameter einer oder mehrerer Lichtfunktionen erlaubt.

Die Auswahl und/oder Veränderung erfolgt beispielsweise durch Betätigung eines virtuellen, auf dem Bildschirm dargestellten Schalters oder Schiebereglers. Die Betätigung kann beispielsweise durch Mausklick oder ähnliches oder etwa bei einem berührungsempfindlichen Bildschirm durch Fingertippen erfolgen.

Die Fahrzeugleuchte kann einen im Wesentlichen von einem Leuchtengehäuse und einer Lichtscheibe umschlossenen Leuchteninnenraum umfassen und mindestens ein darin beherbergtes, wenigstens eine Lichtquelle umfassendes Leuchtmittel für zumindest eine Lichtfunktion der Fahrzeugleuchte.

Die Steuerungseinheit mit ihren Speichermitteln und Mikroprozessor kann zumindest zum Teil in dem Leuchteninnenraum beherbergt sein.

Die Steuerungseinheit ist mit mindestens einem Leuchtmittel der Fahrzeugleuchte derart verbunden, dass sie die zur Erfüllung einer oder mehrerer Lichtfunktionen der Fahrzeugleuchte vorgesehenen Lichtquellen zumindest eines Leuchtmittels der Fahrzeugleuchte:
- zur Übernahme der durch die jeweilige Steuerungsvorgabe festgelegten Parameter gebildeten Einstellungen bei Aktivierung mindestens einer entsprechenden Lichtfunktion veranlasst, und/oder
- zur Aktivierung mindestens einer entsprechenden Lichtfunktion entsprechend der durch die jeweilige Steuerungsvorgabe festgelegten Parameter gebildeten Einstellungen veranlasst.

Ein dritter Gegenstand der Erfindung betrifft ein auf einem computerlesbaren Medium speicherbares Computerprogrammprodukt, umfassend computerlesbare Programmmittel, welche in Speichermitteln der voranstehend beschriebenen Vorrichtung gespeichert die voranstehend beschriebene Vorrichtung und/oder mindestens einen Mikroprozessor der voranstehend beschriebenen Vorrichtung dazu veranlasst, ein voranstehend beschriebenes Verfahren durchzuführen, wenn das Programm von der voranstehend beschriebenen Vorrichtung und/oder mindestens einem Mikroprozessor der voranstehend beschriebenen Vorrichtung ausgeführt wird.

Wichtig ist hervorzuheben, dass die Erfindung verwirklicht sein kann durch ein Verfahren zur Ansteuerung der Lichtquellen einer oder mehrerer Lichtfunktionen einer Fahrzeugleuchte mit mehreren, einzeln oder gruppenweise ansteuerbaren Lichtquellen, insbesondere LEDs.

Das Verfahren sieht eine Fernsteuerung und/oder Fernprogrammierung einer oder mehrerer Lichtfunktionen einer kurz auch als Leuchte bezeichneten Fahrzeugleuchte vor, wobei eine Leuchtfolge an einer Eingabeeinheit festgelegt wird, insbesondere an einem Eingabegerät wie etwa einem Mobilgerät, beispielsweise einem Mobiltelefon, insbesondere Smartphone, Laptop, Tablet, PC, etc.. Die Leuchtfolge wird via Funkstrecke vom Eingabegerät zur Leuchte übertragen. Ein beispielsweise durch einen Microcontroller verwirklichter Mikroprozessor in der Leuchte führt die empfangene Leuchtfolge durch Aktivierung der einzeln oder gruppenweise ansteuerbaren Lichtquellen, insbesondere LEDs, eines oder mehrerer Leuchtmittel der Leuchte aus.

Das Verfahren kann vorsehen, dass die Leuchtfolge nur am stehenden und/oder abgestellten Fahrzeug ausgeführt wird.

Die empfangene Leuchtfolge kann in einem Datenspeichermittel abgelegt und durch vorgegebene Ereignisse zur Ausführung abgerufen werden. Mögliche Ereignisse sind beispielsweise Handlungen wie etwa Öffnen und/oder Schließen des Fahrzeugs, Annäherung mit Eingabegerät ans Fahrzeug und/oder Entfernung mit Eingabegerät vom Fahrzeug. Auch das Vorliegen eines Signals, beispielsweise eines Aktivierungssignals, etwa von einem fahrzeugeigenen Steuerungsgerät ausgehend oder von der Eingabeeinrichtung erzeugt und/oder beispielsweise durch Auswahl und/oder Eingabe an der Benutzerschnittstelle aufgerufen, können eine entsprechende Handlung darstellen oder durch eine Handlung hervorgerufen werden.

Die Fahrzeugleuchte ist vorteilhaft zumindest mit einzeln oder gruppenweise ansteuerbaren LEDs und einem Mikrocontroller mit ausreichender Kanalanzahl ausgestattet.

Die Lichtfolge kann via einer beispielsweise als eine Programmierschnittstelle dienende Benutzerschnittstelle festgelegt und/oder ausgeführt werden, wie etwa via einer auch als Benutzeroberfläche bezeichneten graphischen Bildschirmdarstellung einer intuitiv bedienbaren und grafisch ansprechenden, von Programmmitteln eines Computerprogrammprodukts umfassten, so genannten App.

Die App kann beispielsweise unter bekannten Betriebssystemen wie etwa Android, iOS für Smartphone, Tablet, etc. betrieben werden.

Mithilfe einer Applikation, kurz App, auf einem Endgerät, kann der Anwender Daten und Informationen bidirektional mit der Leuchte austauschen.

Durch die direkte Verbindung von App und Leuchte ist keine umständliche und einschränkende Kommunikation über ein Fahrzeugsteuergerät notwendig.

Somit eröffnen sich neue Möglichkeiten in der Ansteuerung und Individualisierung von Leuchten durch den Anwender, beispielsweise der Initiierung von Leuchtenanimationen bis hin zur Speicherung neuer Animationsabläufe auf dem Speicher in der Leuchte.

Des Weiteren ist das Auslesen von Informationen wie beispielsweise Temperatur, beispielsweise mittels integriertem Temperaturfühler, und Betriebsdauer, beispielsweise mittels Messung und Speicherung der Betriebszeiten eines implementierten Mikrocontrollers, aus der Leuchte denkbar.

Als Schnittstelle für die Übertragung zwischen Sende- und Empfangseinrichtung der Eingabeeinheit und Steuereinheit, beispielsweise zwischen App und Fahrzeug, sind beispielsweise NFC (Near Field Communication), Bluetooth, WLAN, Infrarot denkbar. Die Reichweite liegt dementsprechend abhängig von der gewählten Schnittstelle typischerweise zwischen wenigen cm und bis zu über 100 m.

Die App kann eine freie Konfiguration ermöglichen, vordefinierte Vorlagen enthalten, sowie ein Internetportal für up- und downloadbare Konfigurationen umfassen sowie Kombinationen hiervon.

Denkbare, mittels des Verfahrens festlegbare Lichtfunktionen können Lichtfolgen umfassen beispielsweise für Coming-Home, Leaving-Home, Demomodus, soundabhängige Ansteuerung, Equalizerfunktion, etc..

Die durch Veränderung der Parameter einstellbare Konfiguration einer Steuerungsvorgabe kann das Ein- und Ausschalten und/oder eine Dimmung aller oder einzelner LEDs einer oder mehrerer Lichtfunktionen umfassen.

Damit eine ausgewählte Steuerungsvorgabe nicht ohne weiteres von jedermann geändert werden kann, kann das Verfahren einen Zugriffsschutz mittels Passwort vorsehen. Dementsprechend kann die Vorrichtung Mittel zur Verwirklichung eines Zugriffsschutzes mittels Passwort umfassen.

Vorteile gegenüber dem Stand der Technik sind neben einer vollständigen Lösung der der Erfindung zugrunde liegenden Aufgabe, dass durch die Schaffung einer direkten Schnittstelle zwischen Automobilleuchte und Endkunde letztgenannter einen erweiterten Individualisierungsspielraum erhält, wodurch überraschenderweise die mentale Bindung von Fahrzeug zu Endkunde und gegebenenfalls dadurch auch zu einer bestimmten Automarke gestärkt wird. Beispielsweise können eigens erstelle Lichtanimationen in Form beispielsweise von Lichtszenarien direkt auf die beispielsweise durch einen Speicherbaustein verwirklichten Speichermittel der Steuerungseinheit in der Automobilbeziehungsweise Fahrzeugleuchte dauerhaft gespeichert werden. Ebenfalls können gezielt Lichtfunktionen an- und ausgeschalten werden, um beispielsweise das Rückfahrlicht als Außenraumlichtquelle bei Nacht zu verwenden.

Animationen können nun jederzeit und von überall vom Endkunde abgespielt und sogar mittels App neu erstellt und auf die Fahrzeugleuchte hochgeladen werden. Dabei ist denkbar, dass die Datenübertragung nicht sofort, sondern erst bei einer bestehenden, zur Übertragung dienenden, drahtlosen Verbindung zwischen App und Fahrzeugleuchte erfolgt. Des Weiteren können leuchtenspezifische Daten direkt per App ausgelesen und angezeigt werden, wie etwa Temperatur und/oder Betriebsdauer der Fahrzeugleuchte und/oder einzelner Lichtfunktionen beziehungsweise der die jeweilige Lichtfunktion verwirklichenden Leuchtmittel und/oder deren Lichtquellen.

Da die Kommunikation mit dem neuen Konzept nicht mehr über das Fahrzeugsteuergerät stattfinden muss, werden Themen wie Absicherung und/oder Validierung des Steuergerätes beim Einpflegen neuer Software diesbezüglich nicht mehr nötig sein.

Überraschende, ebenfalls über eine vollständige Lösung der der Erfindung zugrunde liegenden Aufgabe hinausgehende Vorteile sind:
- Individualisierung,
- Hervorhebung der Leuchte als zentrales Designelement,
- Tuningmöglichkeit / Spielerei / mehr Freude am Fahrzeug,
- Steigerung der Bindung zum Fahrzeug,
- zeitgemäße Ausübung der Veränderung von Lichtfunktionen.

Mit der Erfindung wird eine neue Schnittstelle zwischen einer Automobilleuchte und einem Anwender, insbesondere einem Fahrzeughalter geschaffen. Mit einer Automobilleuchte sind dabei ein Scheinwerfer oder die automobile Innenraumbeleuchtung, insbesondere aber die Heckleuchte gemeint. Dabei verbindet die Schnittstelle den Anwender mit der Leuchte, indem der Anwender mithilfe eines geeigneten kommunikationsfähigen Endgerätes, wie etwa Smartphone, Tablet, Laptop, und einer speziell entwickelten Applikation, kurz App, eine direkte Verbindung zur Leuchte herstellen kann.

Die Schnittstellte kann hierfür kabelgebunden sein, bevorzugt jedoch als drahtlose Übertragungsschnittstelle, zusammenführbar in diesem Rahmen insbesondere unter Hinzuziehung von Funktechnologien und/oder optischer Datenübermittlung ausgelegt sein.

Die direkte Verbindung Anwender-Leuchte ermöglicht einen erweiterten Daten- und Informationsaustausch um personalisierter und individualisierter mit der Automobilleuchte kommunizieren und agieren zu können, wodurch sich neue Möglichkeiten zur Interaktion eröffnen.

Durch die Erfindung wird so eine direkte Schnittstelle zwischen Automobilleuchte, bevorzugt der Heckleuchte, und Anwender, insbesondere einem Fahrzeughalter aufgebaut. Diese Schnittstelle kann insbesondere als drahtlose Übertragungsschnittstelle ausgelegt werden, wobei sich die Schnittstelle nicht nur auf aktuelle Standards wie WLAN, Bluetooth, Zigbee und Infrarot beschränken muss. Jedoch hat sich Bluetooth als Kommunikationsstandard für Funkschnittstellen bewährt, da diese Technologie günstig und weit verbreitet ist, vor allem in mobilen Endgeräten.

Die Funkschnittstelle kann unter anderem realisiert werden mit folgenden Standards: NFC, Bluetooth, WLAN, Infrarot, Zigbee.

Die Vorrichtung kann einzelne oder eine Kombination der zuvor und/oder nachfolgend in Verbindung mit dem Verfahren beschriebene Merkmale oder entsprechende Merkmale verwirklichende Mittel aufweisen, ebenso wie das Verfahren einzelne oder eine Kombination mehrerer zuvor und/oder nachfolgend in Verbindung mit der Vorrichtung beschriebene Merkmale und/oder durch entsprechende Mittel verwirklichte Merkmale aufweisen und/oder verwirklichen kann.

Das Verfahren und/oder die Vorrichtung können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: ein Ablaufdiagramm eines Kommunikationsverlaufs zwischen einer von einem Benutzer bedienten Eingabeeinheit bzw. einer von der Eingabeeinheit aus bedienbaren App und einer Steuerungseinheit einer Fahrzeugleuchte einer die Fahrzeugleuchte umfassenden Vorrichtung mit veränderlich steuerbaren Lichtfunktionen der Fahrzeugleuchte.
- Fig. 2: ein Ablaufdiagramm eines Informationsflusses zwischen einer von einem Benutzer bedienten Eingabeeinheit bzw. einer von der Eingabeeinheit aus bedienbaren App und einer Steuerungseinheit einer Fahrzeugleuchte einer die Fahrzeugleuchte umfassenden Vorrichtung mit veränderlich steuerbaren Lichtfunktionen der Fahrzeugleuchte.
- Fig. 3: eine schematische Darstellung einer Anwendung eines Verfahrens zur veränderlichen Steuerung von Lichtfunktionen einer Fahrzeugleuchte.
- Fig. 4: ein Ablaufdiagramm eines Verfahrens zur veränderlichen Steuerung von Lichtfunktionen einer Fahrzeugleuchte.

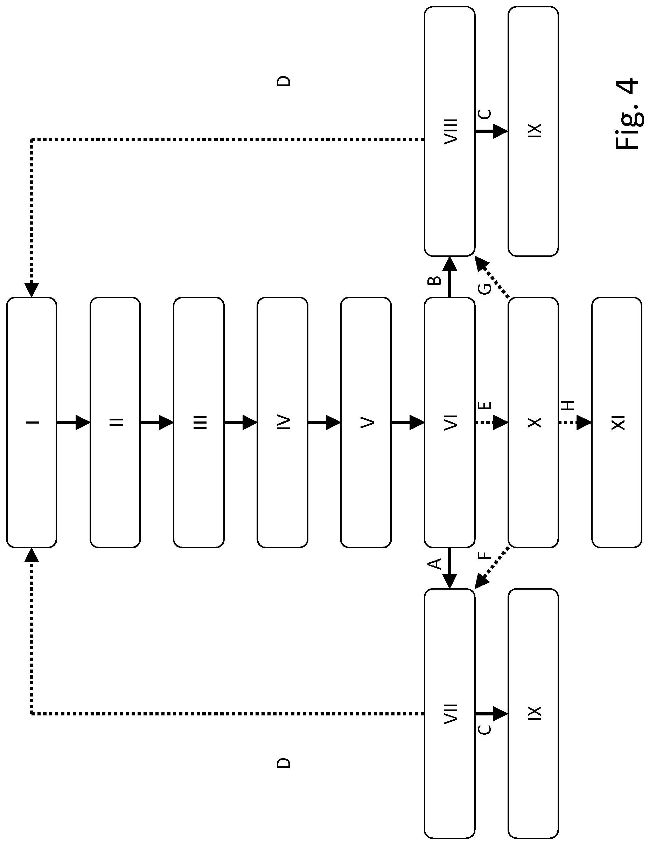

Ein in seinem Ablauf in Fig. 4 ganz oder in Teilen dargestelltes Verfahren zur veränderlichen Steuerung wenigstens einer Lichtfunktion einer Fahrzeugleuchte ist zur Anwendung an beziehungsweise in Verbindung mit einer Fahrzeugleuchte mit wenigstens einem eine oder mehrere Lichtquellen umfassenden, zur Verwirklichung zumindest einer Lichtfunktion der Fahrzeugleuchte vorgesehenen Leuchtmittel vorgesehen.

Im vorliegenden Dokument werden die Begriffe Automobileuchte, Fahrzeugleuchte sowie Leuchte gleichwertig nebeneinanderstehend verwendet.

Unter dem Begriff Automobilleuchte werden allgemein Lampen, Leuchten und Leuchtmittel verstanden, welche im automobilen Bereich zum Einsatz kommen, wie beispielsweise Scheinwerfer, Heckleuchten, Innen- und Außenraumbeleuchtungen. Im Rahmen dieser Erfindung wird unter Fahrzeugleuchte insbesondere eine Automobilleuchte verstanden, insbesondere eine Heckleuchte.

Bei den Lichtquellen handelt es sich vorteilhaft um Halbleiterlichtquellen, bevorzugt um LEDs.

Als Lichtquellen kommen in modernen Fahrzeugleuchten aufgrund ihres hohen Wirkungsgrads bei der Umwandlung elektrischen Stroms in Licht bevorzugt LEDs zum Einsatz. Durch Ihr schnelles Ansprechverhalten eignen sie sich neben anderen denkbaren Halbleiterlichtquellen besonders gut zur Verwirklichung von so genannten Animationen von Lichtfunktionen. LEDs werden wegen ihres geringen Spannungsbedarfs zur Anpassung an die vorherrschende Bordnetzspannung in Kraftfahrzeugen oftmals nicht einzeln, sondern häufig zu mehreren in Reihe zu einem so genannten LED-Strang verschaltet verwendet.

Bei einer erwähnten Animation handelt es sich um eine geregelte zeitliche Abfolge der Ansteuerung von Funktionen, bevorzugt einzelner LED-Stränge, innerhalb einer kurz auch als Leuchte bezeichneten Automobil- oder Fahrzeugleuchte.

Diese Animationen werden durch veränderliche Steuerung einer oder mehrerer Lichtquellen eines oder mehrerer zur Verwirklichung einer oder mehrerer Lichtfunktionen der Fahrzeugleuchte vorgesehener Leuchtmittel erzeugt.

Beispielsweise werden mit Animationen auch sogenannte Welcome Home- und Leaving Home-Funktionen, aber auch ein durch eine dynamische Wiederholblinklichtfunktion verwirklichte dynamische Fahrtrichtungsanzeige als wischender Blinker oder individuell programmierte Abläufe als solche bezeichnet. Animationen veranlassende, den Betrieb einzelner Lichtquellen individuell oder gruppenweise in zeitlicher Folge steuernde Parameter können in einem elektronischem Speicher, insbesondere einem Speicher eines Mikrocontrollers oder einem gesonderten EEPROM (Electrically Erasable Programmable Read-Only Memory, auch E2PROM) hinterlegt sein, aber im Falle der vorliegenden Erfindung auch in Echtzeit beziehungsweise in quasi Echtzeit beispielsweise über eine so genannte App abgespielt werden, wie nachfolgend noch erläutert.

Eine kurz als App bezeichnete Applikation ist eine Anwendungssoftware, welche im allgemeinen Sinn ein Computerprogramm bezeichnet. Dieses Computerprogramm kann auf einem herkömmlichen Computer unter dessen Betriebssystem ablaufen, jedoch kann die App bevorzugt auf einem mobilen System, beispielsweise Tablet oder Smartphone unter eigens für mobile Anwendungen vorgesehenen Betriebssystemen, wie etwa iOS oder Android, ausgeführt werden. Die App stellt die Schnittstelle zwischen Benutzer und deren Benutzereingabe und dem mobilen Gerät oder Computer dar.

Die Art und Weise, wie etwa Intensität und hierdurch Helligkeit und/oder Lichtfarbe sowie des zeitlichen Verlaufs des gruppenweisen und/oder individuellen Betriebs der bevorzugt durch LEDs gebildeten Lichtquellen bei der und/oder zur Aktivierung einer oder mehrerer Lichtfunktionen der Fahrzeugleuchte wird durch Parameter für den Betrieb wenigstens eines eine oder mehrere Lichtquellen umfassenden, zur Verwirklichung zumindest einer Lichtfunktion der Fahrzeugleuchte vorgesehenen Leuchtmittels vorgegeben. So kann beispielsweise durch Parameter, welche auf die Intensität und den Betrieb von Licht unterschiedlicher Lichtfarbe abstrahlenden Lichtquellen Einfluss nehmen, durch Mischen verschiedener Lichtfarben mehrerer Lichtquellen auf die Lichttemperatur und/oder Lichtfarbe einer durch ein Leuchtmittel mit mehreren, Licht unterschiedlicher Lichtfarbe abstrahlenden Lichtquellen verwirklichten Lichtfunktion Einfluss genommen werden. Der zeitliche Verlauf sowohl hinsichtlich Lichtfarbe, als auch hinsichtlich einer Animation kann durch Parameter beeinflusst werden, welche beispielsweise Einschalt- und Ausschaltverzögerungen der Lichtquellen eines zur Verwirklichung einer Lichtfunktion vorgesehenen Leuchtmittels nimmt.

Das Verfahren nimmt Einfluss auf diese den Betrieb der einzelnen Lichtquellen vorgebenden Parameter, um durch Veränderung der Parameter aufgrund von Einflussnahme auf diese eine oder mehrere Lichtfunktionen der Fahrzeugleuchte veränderlich zu steuern.

In einem ersten Verfahrensschritt I sieht das Verfahren eine Erzeugung und Darstellung beziehungsweise Wiedergabe einer virtuellen Benutzerschnittstelle auf einem Bildschirm einer zusätzlich zu dem Bildschirm bevorzugt Speichermittel und Mikroprozessor umfassenden Eingabeeinheit vor.

Die Benutzerschnittstelle kann Einstellungen vorzunehmen erlauben, die eine Umschaltung beispielsweise auf eine reine Sprachsteuerung erlauben.

Die Erzeugung der Benutzerschnittstelle auf dem Bildschirm der Eingabeeinheit erfolgt bevorzugt durch eine App, die vorteilhaft zumindest Teil eines Computerprogrammprodukts ist, welches auf einem computerlesbaren Medium speicherbar ist, und computerlesbare Programmmittel umfasst, welche in Speichermitteln einer die Eingabeeinheit und eine Fahrzeugleuchte umfassenden Vorrichtung gespeichert die Vorrichtung dazu veranlasst, das Verfahren durchzuführen, wenn das Programm von der Vorrichtung ausgeführt wird.

In einem auf den ersten Verfahrensschritt I folgenden zweiten Verfahrensschritt II sieht das Verfahren eine visuelle Darstellung von mindestens zwei verschieden Steuerungsvorgaben für wenigstens eine Lichtfunktion der Fahrzeugleuchte innerhalb der Darstellung beziehungsweise Wiedergabe der Benutzerschnittstelle auf dem Bildschirm vor. Die verschiedenen Steuerungsvorgaben weisen dabei unterschiedliche Voreinstellungen für jeweils einen oder mehrere unterschiedliche Parameter für den Betrieb wenigstens eines eine oder mehrere Lichtquellen umfassenden, zur Verwirklichung zumindest einer Lichtfunktion der Fahrzeugleuchte vorgesehenen Leuchtmittels auf. Die Parameter steuern den individuellen und/oder gruppenweisen Betrieb der Lichtquellen eines oder mehrerer zur Verwirklichung zumindest einer Lichtfunktion der Fahrzeugleuchte vorgesehenen Leuchtmittels. Die verschiedenen Steuerungsvorgaben unterscheiden sich in mindestens einem solchen Parameter voneinander.

In einem auf den zweiten Verfahrensschritt II folgenden dritten Verfahrensschritt III sieht das Verfahren vor, eine Auswahl einer der dargestellten Steuerungsvorgaben für zumindest eine Lichtfunktion zu treffen. Das Treffen der Auswahl erfolgt vorzugsweise durch Betätigung mindestens eines virtuellen, auf dem Bildschirm dargestellten Schalters der Benutzerschnittstelle. Die Betätigung kann beispielsweise durch Mausklick oder ähnliches oder etwa bei einem berührungsempfindlichen Bildschirm durch Fingertippen erfolgen.

In einem auf den dritten Verfahrensschritt III folgenden vierten Verfahrensschritt IV sieht das Verfahren vor, eine Übernahme von durch die jeweilige ausgewählte Steuerungsvorgabe festgelegten Parametern als eine Einstellung für die Lichtquellen des die jeweilige Lichtfunktion verwirklichenden Leuchtmittels vor.

In einem auf den vierten Verfahrensschritt IV folgenden fünften Verfahrensschritt V sieht das Verfahren eine Übertragung der übernommenen, durch die Auswahl einer Steuerungsvorgabe für eine Lichtfunktion festgelegten Parameter von der Eingabeeinheit an die Fahrzeugleuchte vor.

In einem auf den fünften Verfahrensschritt V folgenden sechsten Verfahrensschritt VI sieht das Verfahren eine zumindest zeitweilige Speicherung der von der Eingabeeinheit an die Fahrzeugleuchte übertragenen, durch die Auswahl einer Steuerungsvorgabe für eine Lichtfunktion festgelegten Parameter in einer bevorzugt Speichermittel und Mikroprozessor umfassenden Steuerungseinheit der Fahrzeugleuchte vor.

In einem wie durch den Pfeil A angedeutet auf den sechsten Verfahrensschritt VI folgenden siebten Verfahrensschritt VII sieht das Verfahren entlang des durch den Pfeil A angedeuteten Pfads schließlich ein Abrufen der als Einstellung für den Betrieb der jeweiligen Lichtquellen des die jeweilige Lichtfunktion verwirklichenden Leuchtmittels übernommenen, gespeicherten Parameter beim Aktivieren der jeweiligen Lichtfunktion vor. Hierbei erfolgt das Aktivieren der Lichtfunktion von außen angestoßen, beispielsweise durch Einschalten der entsprechenden Lichtfunktion. Dies kann beispielsweise unter Verwendung einer zuvor ausgewählten Steuerungsvorgabe erfolgen, beispielsweise, wenn in einem Demonstrationsmodus eine Lichtfunktion aufgerufen wird, für welche eine Steuerungsvorgabe mit gegenüber beispielsweise den Betrieb der Lichtquellen der zur Erfüllung der Lichtfunktionen vorgesehenen Leuchtmittel entsprechend der gesetzlichen Vorgaben für die Lichtfunktionen steuernden Parametern veränderten Parametern in der Steuerungseinheit der Fahrzeugleuchte gespeichert wurde. Dies kann auch erfolgen, wenn beispielsweise bei einer an einem Fahrzeug verbauten Fahrzeugleuchte fahrzeugseitig eine Lichtfunktion der Fahrzeugleuchte abgerufen wird, die dann entsprechend einer Steuerungsvorgabe ausgeführt wird, die im Vergleich zu den Betrieb der Lichtquellen der zur Erfüllung der Lichtfunktionen vorgesehenen Leuchtmittel entsprechend der gesetzlichen Vorgaben für die Lichtfunktionen steuernden Parametern veränderte Parameter aufweist, oder aber auch gegenüber diesen unveränderte Parameter aufweisen kann.

Alternativ sieht das Verfahren in einem wie durch den Pfeil B angedeutet anstelle des siebten Verfahrensschritts VII alternativ stattfindenden achten Verfahrensschritt VIII eine Aktivierung der jeweiligen Lichtquellen des die jeweilige Lichtfunktion verwirklichenden Leuchtmittels entsprechend den Einstellungen beziehungsweise entsprechend den als Einstellung für die jeweilige Lichtfunktion übernommenen, gespeicherten Parameter bei Vorliegen von den Einstellungen beziehungsweise den als Einstellung für die jeweilige Lichtfunktion übernommenen, gespeicherten Parametern entsprechenden Voraussetzungen vor. Hierbei erfolgt die Aktivierung der jeweiligen Lichtfunktion quasi selbständig, beispielsweise bei Vorliegen von durch die Parameter definierten Voraussetzungen. Solche Voraussetzungen können beispielsweise ein selbstablaufender Demonstrationsmodus, eine Eingabe beispielsweise via der App beispielsweise im Verlauf eines Spiels, oder das Vorliegen der durch eine Verknüpfung herstellende Parameter definierten Vorgaben, wie etwa dass eine bestimmte Lichtfunktion vorher beispielsweise fahrzeugseitig aktiviert wurde, oder dass beispielsweise ein Signal, mit dem eine oder mehrere Lichtfunktionen gemäß einer Steuerungsvorgabe verknüpft sind, vorhanden ist und/oder dessen Signalstärke einen durch einen Parameter vorgebbaren Schwellenwert überschreitet.

Beispiele hierfür sind Lichtfolgen im Anschluss beispielsweise an das Aufrufen einer Lichtfunktion, wie dies für Tonfolgen bei Signalhörnern wie etwa bei einer so genannten La Cucaracha Fanfare bekannt ist, oder eine Lichtorgelfunktion in Verbindung mit Ton- und/oder Mikrofonsignalen, etc..

In jedem Fall erfolgt die Aktivierung der jeweiligen Lichtfunktion der Fahrzeugleuchte durch individuelle Ansteuerung der Lichtquellen des zur Verwirklichung der jeweiligen Lichtfunktion vorgesehenen Leuchtmittels gemäß den durch die Parameter gebildeten Vorgaben. Dabei können die Parameter eine individuelle Ansteuerung der Lichtquellen vorgeben, welche deren gemeinsame oder gruppenweise gemeinsame Inbetriebnahme im Sinne einer Lichtabgabe vorsieht. Auch das Erlöschen sowie Einschaltverzögerungen bei der Inbetriebnahme und/oder beim Erlöschen können durch die Parameter vorgegeben werden beziehungsweise vorgegeben sein.

Die Steuerungseinheit der Fahrzeugleuchte ist mit den Leuchtmitteln der Fahrzeugleuchte derart verbunden, dass sie die zur Erfüllung einer oder mehrerer Lichtfunktionen der Fahrzeugleuchte vorgesehenen Lichtquellen zumindest eines Leuchtmittels der Fahrzeugleuchte:
- zur Übernahme der durch die jeweilige Steuerungsvorgabe festgelegten Parameter gebildeten Einstellungen bei Aktivierung mindestens einer entsprechenden Lichtfunktion veranlasst, und/oder
- zur Aktivierung mindestens einer entsprechenden Lichtfunktion entsprechend der durch die jeweilige Steuerungsvorgabe festgelegten Parameter gebildeten Einstellungen veranlasst.

Durch die fahrzeugleuchtenseitige Speicherung einer Steuerungsvorgabe für eine Lichtfunktion werden die durch die jeweilige Steuerungsvorgabe festgelegten Parameter als Einstellung für die jeweilige Lichtfunktion bei jeder Aktivierung der entsprechenden Lichtfunktion abgerufen und/oder die jeweilige Lichtfunktion entsprechend der Einstellung aktiviert.

Eine Aktivierung einer oder mehrerer Lichtfunktionen erfolgt beispielsweise durch fahrzeugseitige Ansteuerung der entsprechenden Lichtfunktionen, beispielsweise durch Betätigung des Fahrtrichtungsanzeigers, des Bremspedals, des Fahrlichtschalters, des Einlegens des Rückwärtsgangs, etc., in einem mit einer entsprechenden Fahrzeugleuchte ausgestatteten Fahrzeug.

Eine Veranlassung zur Aktivierung kann beispielsweise bei einer Steuerungsvorgabe mit einen signalabhängigen Betrieb festlegenden Parametern durch Vorhandensein des Signals, beispielsweise eines Sensorsignals und/oder eines Tonsignals und/oder Überschreitung eines Schwellenwerts für die Signalstärke erfolgen.

Mit anderen Worten werden die Einstellungen zumindest beim Aktivieren der jeweiligen Lichtfunktion abgerufen oder umfassen eine entsprechend den Einstellungen vorgenommene Aktivierung der jeweiligen Lichtfunktion.

Demnach sieht das Verfahren zur veränderlichen Steuerung wenigstens einer Lichtfunktion einer Fahrzeugleuchte vor, eine virtuelle Benutzerschnittstelle auf einem Bildschirm einer zusätzlich zu dem Bildschirm Speichermittel und Mikroprozessor umfassenden Eingabeeinheit wiederzugeben, welche eine Auswahl von mindestens zwei verschieden Steuerungsvorgaben wenigstens einer Lichtfunktion visuell darstellt.

Das Verfahren sieht weiterhin vor, eine Auswahl jeweils einer Steuerungsvorgabe für zumindest eine Lichtfunktion zu treffen. Die Auswahl erfolgt durch Betätigung eines virtuellen, auf dem Bildschirm dargestellten Schalters. Die Betätigung kann beispielsweise durch Mausklick oder ähnliches, oder etwa bei einem berührungsempfindlichen Bildschirm durch Fingertippen erfolgen.

Durch die Auswahl einer Steuerungsvorgabe für eine Lichtfunktion werden die durch die jeweilige Steuerungsvorgabe festgelegten Parameter als Einstellung für die jeweilige Lichtfunktion übernommen.

Durch die Übernahme von durch die jeweilige ausgewählte Steuerungsvorgabe festgelegten Parametern als eine Einstellung für die jeweilige Lichtfunktion werden die Parameter für die Art und Weise des individuellen Betriebs der Lichtquellen einer oder mehrerer zur Verwirklichung mindestens einer Lichtfunktion vorgesehener Leuchtmittel der Fahrzeugleuchte gemäß der ausgewählten Steuerungsvorgabe festgelegt wann immer die Lichtfunktion abgerufen beziehungsweise aktiviert wird. Das Abrufen kann beispielsweise durch eine Verknüpfung bewirkende Parameter erfolgen. Hierbei erfolgt eine Aktivierung der Lichtfunktion immer dann, wenn die durch die Verknüpfung definierten Voraussetzungen erfüllt sind. Die Aktivierung erfolgt dann jeweils unter Anwendung entsprechend der verbleibenden, durch die Auswahl festgelegten Parameter. Die Verknüpfung kann beispielsweise eine Aktivierung und/oder Deaktivierung oberhalb und/oder unterhalb eines bestimmten Pegels eines Signals, beispielsweise eines Tonsignals, erfolgen. Auch ein elektrisches Ansteuerungssignal für eine Lautsprecherwidergabe kann ein entsprechendes Signal sein.

Demnach kann durch die Übernahme von durch die jeweilige ausgewählte Steuerungsvorgabe festgelegten Parametern als eine Einstellung für die jeweilige Lichtfunktion die Lichtfunktion beim Vorliegen der durch die Parameter festgelegten Voraussetzungen unter Anwendung der Parameter aktiviert werden und/oder es werden die Parameter bei Aktivierung der entsprechenden Lichtfunktion angewendet.

Im nächsten Verfahrensschritt sieht das Verfahren vor, die durch die Auswahl einer Steuerungsvorgabe für eine Lichtfunktion festgelegten Parameter von der Eingabeeinheit an die Fahrzeugleuchte zu übertragen.

In einem darauffolgenden Verfahrensschritt werden die von der Eingabeeinheit an die Fahrzeugleuchte übertragenen, durch die Auswahl einer Steuerungsvorgabe für eine Lichtfunktion festgelegten Parameter in einer beispielsweise in einem Leuchteninnenraum der Fahrzeugleuchte beherbergten, vorzugsweise Speichermittel und Mikroprozessor umfassenden Steuerungseinheit der Fahrzeugleuchte zumindest zeitweilig gespeichert.

In einem anschließenden Verfahrensschritt werden die als Einstellung für die jeweilige Lichtfunktion übernommenen, gespeicherten Parameter beim Aktivieren der jeweiligen Lichtfunktion abgerufen und/oder es erfolgt eine entsprechend den Einstellungen vorgenommene Aktivierung der jeweiligen Lichtfunktion bei Vorliegen der den Einstellungen entsprechenden Voraussetzungen.

Ersteres ist beispielsweise dann der Fall, wenn an der Benutzerschnittstelle eine bestimmte Lichtfunktion oder dynamische Wiedergabe einer Lichtfunktion oder eine entsprechende Abfolge von Lichtfunktionen oder Wiedergaben beispielsweise für eine Begrüßungssequenz etwa beim Aufschließen und/oder Öffnen eines Fahrzeugs festgelegt wurde und ein entsprechendes auslösendes Ereignis die Lichtfunktion dann aktiviert, wie etwa das Aufschließen und/oder Öffnen des Fahrzeugs (Coming Home oder Welcome Home und Leaving Home Animationen).

Auch für ein Auslösen der Lichtfunktion von der Eingabeeinheit, beispielsweise durch Betätigung eines von einer App auf einem Bildschirm eines Smartphones dargestellten und durch Berühren betätigbaren virtuellen Auslöseschalters von dem Smartphone aus, gilt ersteres.

Letzteres kann beispielsweise dann der Fall sein, wenn die Steuerungsvorgabe eine einmalige oder mehrfache, beispielsweise permanente Wiederholung einer oder mehrerer Lichtfunktionen vorsieht, beispielsweise zu Demonstrationszwecken.

Letzteres kann außerdem der Fall sein, wenn die Steuerungsvorgabe, deren Parameter als Einstellung für die jeweilige Lichtfunktion gespeichert und übernommenen worden sind, beispielsweise eine Verknüpfung mit einem Signal vorsieht, und ein entsprechendes Signal auftritt, wie etwa bei einer Lichtorgel.

Darüber hinaus sind Kombinationen denkbar, wobei ein erstes auslösendes Ereignis eine Folge von Lichtfunktionen nach sich zieht, die jeweils auslösendes Ereignis für die darauffolgende Lichtfunktion sein können.

Wichtig ist hervorzuheben, dass grundsätzlich verschiedene Steuerungsvorgaben unterschiedliche Lichtfunktionen der Fahrzeugleuchte betreffen können.

Das Verfahren kann in einem sich an den siebten Verfahrensschritt VII sowie auch an den achten Verfahrensschritt VIII wie durch Pfeil C angedeutet anschließenden neunten Verfahrensschritt IX enden.

Endet das Verfahren nicht im neunten Verfahrensschritt IX, so können die ausgewählten Steuerungsvorgaben beibehalten werden (Verfahrensschritt VII) oder entsprechend den durch einen oder mehrere Parameter vorgegebenen Voraussetzungen beibehalten (Verfahrensschritt VIII) werden, bis die Voraussetzungen nicht mehr erfüllt sind. Letzteres kann beispielsweise bei Erreichen einer vorgegebenen Anzahl von Wiederholungen der Fall sein.

Alternativ kann das Verfahren wie durch die gestrichelten Pfeile D angedeutet im Anschluss an den siebten Verfahrensschritt VII sowie auch an den achten Verfahrensschritt VIII anschließend wieder von Vorn beginnen, indem beispielsweise eine andere Steuerungsvorgabe an der Benutzerschnittstelle ausgewählt und zur Fahrzeugleuchte übertragen wird und/oder ein oder mehrere Parameter einer Steuerungsvorgabe an der Benutzerschnittstelle geändert und zur Fahrzeugleuchte übertragen werden.

Das Verfahren kann vorteilhaft vorsehen, dass die verschiedenen Steuerungsvorgaben Voreinstellungen eines oder mehrerer Parameter für die Steuerung des individuellen Betriebs der Lichtquellen eines oder mehrerer jeweils eine oder mehrere Lichtquellen umfassenden, zur Verwirklichung mindestens einer Lichtfunktion der Fahrzeugleuchte vorgesehenen Leuchtmittels umfassen.

Alternativ oder zusätzlich kann das Verfahren vorteilhaft vorsehen, dass die verschiedenen Steuerungsvorgaben die Vornahme von Voreinstellungen eines oder mehrerer solcher Parameter erlauben. Die Parameter steuern den individuellen Betrieb der Lichtquellen eines oder mehrerer jeweils eine oder mehrere Lichtquellen umfassenden, zur Verwirklichung mindestens einer Lichtfunktion der Fahrzeugleuchte vorgesehenen Leuchtmittels bei Aktivierung der jeweiligen, durch ein betroffenes Leuchtmittel verwirklichten Lichtfunktion. Die Aktivierung stellt hierbei einen äußeren Anstoß dar, etwa durch ein Steuerungssignal eines fahrzeugeigenen Steuergeräts, welches die Aktivierung einer entsprechenden Lichtfunktion durch Strombeaufschlagung des diese verwirklichenden Leuchtmittels anfordert. Beispiele sind die Betätigung des Fahrtrichtungsschalters oder das Einschalten des Fahrlichts oder die Betätigung des Bremspedals in einem mit einer entsprechenden Fahrzeugleuchte ausgestatteten Fahrzeug. Auch eine Aktivierung durch Betätigung eines Schalters auf der auf dem Bildschirm der Eingabeeinheit dargestellten Benutzerschnittstelle kann eine solche Aktivierung auslösen. Alternativ oder zusätzlich können die Parameter die Aktivierung des individuellen Betriebs der Lichtquellen eines oder mehrerer jeweils eine oder mehrere Lichtquellen umfassenden, zur Verwirklichung mindestens einer Lichtfunktion der Fahrzeugleuchte vorgesehenen Leuchtmittels entsprechend veranlassen. Dies kann beispielsweise durch eine Verknüpfung mit einem Signal und/oder mit einem Schwellenwert für ein Signal herstellende Parameter gegeben sein. Das Signal kann ein Aktivierungsbefehl von einem fahrzeugeigenen Steuergerät und/oder ein durch Betätigung eines Schalters auf der auf dem Bildschirm der Eingabeeinheit dargestellten Benutzerschnittstelle ausgelöstes Aktivierungssignal sein. Denkbar ist jedoch auch eine Verknüpfung mit einem Signal eines Sensors, wie beispielsweise einem Annäherungssensor, der eine Annäherung der Eingabeeinheit an die Fahrzeugleuchte erfasst und unterhalb eines vorgebbaren Schwellenwerts für den Abstand der Eingabeeinheit zur Fahrzeugleuchte ein Annäherungssignal abgibt, oder der ein der Entfernung proportionales Annäherungssignal erzeugt, das wiederum durch einen beispielsweise weiteren Parameter festgelegt bei Überschreitung eines Schwellenwerts ein Aktivierungssignal für eine entsprechende Lichtfunktion darstellt. Denkbar ist in diesem Zusammenhang auch ein Abstandssensor, der den Abstand zu beispielsweise nachfolgenden Fahrzeugen erfasst und ein diesem Abstand proportionales Signal ausgibt. Bei Unterschreitung eines vorgebbaren Mindestabstands können durch die Parameter festgelegt die Lichtquellen eines oder mehrerer Lichtfunktionen der Fahrzeugleuchte verwirklichender Leuchtmittel entsprechend durch weitere Parameter festgelegter Vorgaben individuell gesteuert aktiviert werden.

Eine besonders vorteilhafte Ausgestaltung des Verfahrens sieht vor, dass es zumindest eine Steuerungsvorgabe bereithält, welche eine individuelle Festlegung eines oder mehrerer der Parameter vorzunehmen erlaubt.

Eine solche Steuerungsvorgabe kann beispielsweise auf dem durch sie zugänglichen Bildschirminhalt dargestellte virtuelle Schalter und/oder virtuelle Schieberegler umfassen, die es erlauben, einen oder mehrere beispielsweise auswählbare Parameter innerhalb der Steuerungsvorgabe kontinuierlich oder in diskreten Schritten zu ändern und entsprechend innerhalb der Steuerungsvorgabe geändert beizubehalten beziehungsweise festzulegen, beispielsweise um die Lichtfarbe kontinuierlich, oder um sie in Farbstufen zu ändern, oder um einen Blinktakt festzulegen, oder um eine dynamische Lichtfunktion zu generieren, etwa durch in einer Reihe von individuell ansteuerbaren Lichtquellen von einer zur anderen Seite hin zunehmende Einschaltverzögerungen. Ebenfalls denkbar ist eine durch ein Leuchtmittel mit mehreren individuell ansteuerbaren Lichtquellen oder durch mehrere Lichtquellen mehrerer individuell ansteuerbarer Leuchtmittel dynamische Lichtfunktion mit beispielsweise vom Inneren einer Leuchtfläche, beispielsweise deren Leuchtflächenschwerpunkt, nach außen zum Rand der Leuchtfläche hin oder umgekehrt von außen nach innen hin zunehmender Einschaltverzögerung der jeweils aufleuchtenden Lichtquellen. Durch abwechselnde von innen nach außen und von außen nach innen zunehmende Einschaltverzögerungen lässt sich durch kontinuierliche Ausführung der Lichtfunktion ein hin- und hergehender optischer Effekt ähnlich in einer Schüssel schwappenden Wassers erzielen.

Die Parameter können beispielsweise individuelle Leuchtdauer und/oder individuelle Leuchtstärke und/oder individuelle Wiederholfrequenz und/oder individuelle Wiederholungsanzahl und/oder individuelle Einschaltverzögerung der einzelnen, individuell ansteuerbaren Lichtquellen eines oder mehrerer, zur Verwirklichung einer oder mehrerer Lichtfunktionen vorgesehener Leuchtmittel der Fahrzeugleuchte umfassen.

Umfasst ein Leuchtmittel Licht unterschiedlicher Lichtfarbe abstrahlende Lichtquellen, so kann durch Veränderung eines oder mehrerer Parameter für mindestens eine der Lichtquellen die Licht- beziehungsweise Leuchtfarbe und/oder Lichttemperatur der durch das entsprechende Leuchtmittel verwirklichten Lichtfunktion beeinflusst werden.

Die Parameter können dabei direkt veränderbar sein, indem beispielsweise Werte eingebbar sind, oder sie können indirekt, am Beispiel der Lichtfarbe durch Farbauswahl, veränderbar sein.

Ohne Anspruch auf Vollständigkeit der nachfolgenden Aufzählung kann es sich bei den veränderbaren Parametern für die jeweilige Lichtfunktion demnach um Leuchtdauer, Leuchtstärke, Leuchtfarbe, Wiederholfrequenz, Wiederholungsanzahl, Einschaltverzögerung der einzeln, individuell ansteuerbaren Lichtquellen und/oder einer oder mehreren Gruppen von Lichtquellen eines oder mehrerer zur Verwirklichung einer gemeinsamen Lichtfunktion oder mehrerer verschiedener Lichtfunktionen vorgesehener Leuchtmittel oder um eine oder mehrere Kombination hiervon handeln.

Auch eine Verknüpfung mit einem Signal und/oder die Empfindlichkeit einer solchen Verknüpfung können alternativ oder zusätzlich von den Steuerungsvorgaben als Parameter umfasst sein. Ein entsprechendes Beispiel ist eine Verknüpfung mit einem Tonsignal, etwa einem einer Musikwiedergabe dienenden Tonsignal oder einem Ausgangssignal eines Mikrofons, beispielsweise um einen Lichteffekt wie bei einer Lichtorgel unter Hinzuziehung beispielsweise mehrerer Lichtfunktionen der Fahrzeugleuchte zu erhalten.

Demnach können die Parameter eine Verknüpfung des Betriebs einer oder mehrerer Lichtquellen mit einem Signal und/oder die Empfindlichkeit einer solchen Verknüpfung umfassen.

Eine bevorzugte Ausgestaltung des Verfahrens sieht vor, dass die Übertragung von der Eingabeeinheit an die Fahrzeugleuchte drahtlos erfolgt. Besonders vorteilhaft erfolgt die drahtlose Übertragung via elektromagnetischer Wellen, wie etwa per Funk. Die Übertragung kann sich eines Übertragungsstandards für drahtlose Kommunikation bedienen, wie etwa Bluetooth. Grundsätzlich sind jedoch andere drahtlose Übertragungstechniken denkbar, wie etwa durch Ultraschallsignale oder dergleichen.

Das Verfahren kann wie durch einen gestrichelten Pfeil E angedeutet in einem auf den sechsten Verfahrensschritt VI anstelle des siebten Verfahrensschritts VII und anstelle des alternativ zum siebten Verfahrensschritt VII ausgeführten achten Verfahrensschritts VIII zumindest zunächst folgenden zehnten Verfahrensschritt X vorsehen festzustellen, ob nicht eine Erfüllung der Lichtfunktion entsprechend gesetzlicher Vorgaben erforderlich wäre.

Das Verfahren kann hierzu in einem wie durch gestrichelte Pfeile E, F, G angedeutet nach dem sechsten Verfahrensschritt VI und - sofern es hierzu kommt - vor dem siebten Verfahrensschritt VII sowie nach dem sechsten Verfahrensschritt VI und - sofern es hierzu kommt - vor dem alternativ zum siebten Verfahrensschritt VII ausgeführten achten Verfahrensschritt VIII liegenden zehnten Verfahrensschritt X vorsehen, dass vor der Aktivierung einer Lichtfunktion einhergehend mit einem individuellen Betrieb der Lichtquellen des zur Verwirklichung der jeweiligen Lichtfunktion vorgesehenen Leuchtmittels gemäß den durch die in den Speichermitteln der Steuerungseinheit der Fahrzeugleuchte im vorangehenden sechsten Verfahrensschritt VI gespeicherte Steuerungsvorgabe festgelegten Parameter festgestellt wird, ob ein mit der Fahrzeugleuchte ausgestattetes Fahrzeug am fließenden Verkehr teilnimmt und/oder zur Teilnahme am fließenden Verkehr bereit ist. In einem solchen Fall wäre eine Erfüllung der Lichtfunktion entsprechend der gesetzlichen Vorgaben erforderlich.

Hierzu sieht das Verfahren in dem wie durch gestrichelte Pfeile E angedeutet nach dem sechsten Verfahrensschritt VI und in jedem Fall vor dem sich entlang des durch den gestrichelten Pfeil F angedeuteten Pfads gegebenenfalls anschließenden siebten Verfahrensschritt VII sowie nach dem sechsten Verfahrensschritt VI und in jedem Fall vor dem sich entlang des durch den gestrichelten Pfeil G angedeuteten Pfads gegebenenfalls anschließenden, alternativ zum siebten Verfahrensschritt VII ausgeführten achten Verfahrensschritt VIII liegenden zehnten Verfahrensschritt X beispielsweise eine Abfrage eines fahrzeugeigenen Steuergeräts eines mit der Fahrzeugleuchte ausgestatteten Fahrzeugs vor.

Wenn die Abfrage ergibt, dass ein mit der Fahrzeugleuchte ausgestattetes Fahrzeug am fließenden Verkehr teilnimmt und/oder zur Teilnahme am fließenden Verkehr bereit ist, sieht das Verfahren in einem wie durch einen gestrichelten Pfeil H angedeutet auf den alternativen zehnten Verfahrensschritt X folgenden elften Verfahrensschritt XI vor, dass bevorzugt für alle Lichtfunktionen der Fahrzeugleuchte automatisch fixe, beispielsweise unlöschbar und/oder dauerhaft in den Speichermitteln gespeicherte Prioritäts-Steuerungsvorgaben in der Steuerungseinheit der Fahrzeugleuchte aktiviert werden, deren Parameter den Betrieb der Lichtquellen der zur Erfüllung der Lichtfunktionen vorgesehenen Leuchtmittel entsprechend der gesetzlichen Vorgaben für die Lichtfunktionen steuern.

Hat die Abfrage zum Ergebnis, dass keine Teilnahme am fließenden Verkehr stattfindet oder vorgesehen ist, oder keine Bereitschaft zur Teilnahme am fließenden Verkehr besteht, so kann das Verfahren im Anschluss an den zehnten Verfahrensschritt X wie durch die gestrichelten Pfeile F und G angedeutet vorsehen, entweder entlang des durch den gestrichelten Pfeil F angedeuteten Pfads im bereits erläuterten, siebten Verfahrensschritt VII ein Abrufen der als Einstellung für den Betrieb der jeweiligen Lichtquellen des die jeweilige Lichtfunktion verwirklichenden Leuchtmittels übernommenen, gespeicherten Parameter beim Aktivieren der jeweiligen Lichtfunktion vorzusehen, oder entlang des durch den gestrichelten Pfeil G angedeuteten Pfads im ebenfalls bereits erläuterten, anstelle des siebten Verfahrensschritts VII alternativ stattfindenden achten Verfahrensschritt VIII eine Aktivierung der jeweiligen Lichtquellen des die jeweilige Lichtfunktion verwirklichenden Leuchtmittels entsprechend den Einstellungen beziehungsweise entsprechend den als Einstellung für die jeweilige Lichtfunktion übernommenen, gespeicherten Parameter bei Vorliegen von den Einstellungen beziehungsweise den als Einstellung für die jeweilige Lichtfunktion übernommenen, gespeicherten Parametern entsprechenden Voraussetzungen vorzusehen.

Im Anschluss an den elften Verfahrensschritt XI kann das Verfahren wiederum enden oder erneut von vorn beginnen.

Das Verfahren kann nach jeder Teilnahme eines mit der Fahrzeugleuchte ausgestatteten Fahrzeugs am fließenden Verkehr und/oder nach jeder Bereitschaft eines mit der Fahrzeugleuchte ausgestatteten Fahrzeugs zur Teilnahme am fließenden Verkehr erneut von vorn beginnen. Beginnt das Verfahren erneut von vorn, kann es einer erneuten Auswahl einer Steuerungsvorgabe, deren Parameter den Betrieb der Lichtquellen der zur Erfüllung einer oder mehrerer Lichtfunktionen vorgesehenen Leuchtmittel abweichend von den der gesetzlichen Vorgaben für die Lichtfunktionen steuern, bedürfen.

Alternativ kann das Verfahren nach jeder Teilnahme eines mit der Fahrzeugleuchte ausgestatteten Fahrzeugs am fließenden Verkehr und/oder nach jeder Bereitschaft eines mit der Fahrzeugleuchte ausgestatteten Fahrzeugs zur Teilnahme am fließenden Verkehr wieder die Verwendung der zuletzt an der Eingabeeinheit ausgewählten Steuerungsvorgabe vorsehen.

Eine besonders vorteilhafte Ausgestaltung des Verfahrens sieht vor, dass es eine Aktivierung einer oder mehrerer Lichtfunktionen unter Anwendung der Parameter einer oder mehrerer in den Speichermitteln der Steuerungseinheit gespeicherter Steuerungsvorgaben durch einen von der Eingabeeinheit an die Steuerungseinheit übertragenen Aktivierungsbefehl vorsieht.

Ein solcher Aktivierungsbefehl kann manuell und/oder durch Vorliegen von innerhalb einer Steuerungsvorgabe vorgebbaren und/oder festgelegten Parametern erfolgen, beispielsweise durch Betätigung eines virtuellen Aktivierungssschalters und/oder -knopfs, und/oder beispielsweise durch Annäherung an die Fahrzeugleuchte oder an ein mit dieser ausgestattetes Fahrzeug, durch Betätigung eines Öffnungs- und/oder Verriegelungsbefehls an ein mit der Fahrzeugleuchte ausgestattetes Fahrzeug, etc..

Das Verfahren ist besonders bevorzugt zur Ausführung an einer ruhenden Fahrzeugleuchte vorgesehen. Dementsprechend nimmt ein mit einer entsprechenden Fahrzeugleuchte ausgestattetes Fahrzeug, von deren Lichtfunktionen mindestens eine nach dem beschriebenen Verfahren durch Auswahl einer Steuerungsvorgabe abweichend von den gesetzlichen Vorgaben verändert wurde bevorzugt nicht am fließenden Verkehr teil.

Um die Gesetzgebung einzuhalten ist das auch als eine Fernsteuerung der als Automobilleuchte ausgeführten Fahrzeugleuchte bezeichenbare Verfahren bevorzugt nur im Aus-Zustand des Fahrzeuges, insbesondere nur bei stehendem, nicht am fließenden Verkehr teilnehmendem Fahrzeug ausführbar. Hierzu kann das Verfahren eine Abfrage eines Fahrzustands eines mit der Fahrzeugleuchte ausgestatteten Fahrzeugs vorsehen. Dies kann beispielsweise durch eine Abfrage eines die Lichtfunktionen im Fahrbetrieb ansteuernden, fahrzeugeigenen Steuergeräts erfolgen. Hierzu kann eine Verbindung der Steuerungseinheit mit dem Steuergerät und/oder mit einem mit dem Steuergerät in Verbindung stehenden Fahrzeugbussystem vorgesehen sein, wie etwa LIN-Bus.

Wichtig ist hervorzuheben, dass das Verfahren die Übertragung eines Computerprogrammprodukts zumindest auf die Eingabeeinheit vorsehen kann, welches in den Speichermitteln zumindest der Eingabeeinheit abgelegt zumindest den Mikroprozessor der Eingabeeinheit zur Ausführung eines oder mehrerer der beschriebenen Verfahrensschritte des Verfahrens veranlassen kann, einschließlich der Darstellung der virtuellen Benutzerschnittstelle auf dem Bildschirm der Eingabeeinheit.

Ebenfalls wichtig ist hervorzuheben, dass zumindest derjenige ein voranstehend beschriebenes Verfahren betreffende Teil der Erfindung verwirklicht sein kann durch ein Verfahren zur Ansteuerung der Lichtquellen einer oder mehrerer Lichtfunktionen einer Fahrzeugleuchte mit mehreren, einzeln oder gruppenweise ansteuerbaren Lichtquellen, insbesondere LEDs.

Das Verfahren sieht eine Fernsteuerung und/oder Fernprogrammierung einer oder mehrerer Lichtfunktionen einer kurz auch als Leuchte bezeichneten Fahrzeugleuchte vor, wobei eine Leuchtfolge an einer Eingabeeinheit festgelegt wird, insbesondere an einem Eingabegerät wie etwa einem Mobilgerät, beispielsweise einem Mobiltelefon, insbesondere Smartphone, Laptop, Tablet, PC, etc.. Die Leuchtfolge wird via Funkstrecke vom Eingabegerät zur Leuchte übertragen. Ein beispielsweise durch einen Microcontroller verwirklichter Mikroprozessor in der Leuchte führt die empfangene Leuchtfolge durch Aktivierung der einzeln oder gruppenweise ansteuerbaren Lichtquellen, insbesondere LEDs, eines oder mehrerer Leuchtmittel der Leuchte aus.

Das Verfahren kann vorsehen, dass die Leuchtfolge nur am stehenden und/oder abgestellten Fahrzeug ausgeführt wird.

Die empfangene Leuchtfolge kann in einem zur Datenspeicherung vorgesehenen Speichermittel, kurz Datenspeichermittel, abgelegt und durch vorgegebene Ereignisse zur Ausführung abgerufen werden. Mögliche Ereignisse sind beispielsweise Handlungen wie etwa Öffnen und/oder Schließen des Fahrzeugs, Annäherung mit Eingabegerät ans Fahrzeug und/oder Entfernung mit Eingabegerät vom Fahrzeug.

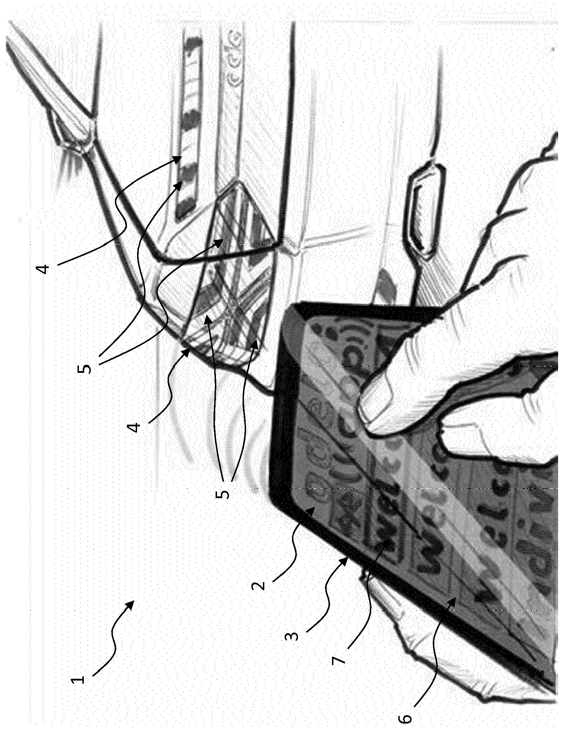

Ein voranstehend beschriebenes, erfindungsgemäßes Verfahren kann beispielsweise durch eine ganz oder in Teilen in Fig. 3 dargestellte Vorrichtung 1 zur Ausführung eines voranstehend beschriebenen Verfahrens umfassend eine Bildschirm 2, Speichermittel und Mikroprozessor umfassende Eingabeeinheit 3 sowie eine Fahrzeugleuchte 4 mit Speichermittel und Mikroprozessor umfassender Steuerungseinheit ausgeführt werden.

Die Fahrzeugleuchte 4 ist vorteilhaft zumindest mit einzeln oder gruppenweise ansteuerbaren LEDs als Lichtquellen und einem beispielsweise einen Mikrocontroller umfassenden Mikroprozessor mit ausreichender Kanalanzahl ausgestattet. Die Kanalzahl entspricht hierbei vorzugsweise der Anzahl der individuell ansteuerbaren Lichtquellen oder-wie zu den LED-Strängen bereits erläutert - Gruppen von Lichtquellen sämtlicher Leuchtmittel der Fahrzeugleuchte.

Die Vorrichtung 1 umfasst eine Sende- und Empfangseinrichtung zumindest zur drahtlosen Übertragung von Steuerungsvorgaben von der Eingabeeinheit 3 an die Steuerungseinheit der Fahrzeugleuchte 4.

Die Steuerungseinheit der Fahrzeugleuchte 4 ist mit mindestens einem zur Erfüllung einer Lichtfunktion 5 der Fahrzeugleuchte 4 vorgesehenen Leuchtmittel mit mehreren Lichtquellen derart verbunden, dass die Steuerungseinheit den individuellen Betrieb der Lichtquellen bei Aktivierung der entsprechenden Lichtfunktion 5 gemäß durch eine in den Speichermitteln zumindest kurzzeitig gespeicherte Steuerungsvorgabe vorgegebene Parameter steuert und/oder die Lichtquellen gemäß durch eine in den Speichermitteln zumindest kurzzeitig gespeicherte Steuerungsvorgabe vorgegebene Parameter bei Vorliegen der gemäß der Parameter definierten Vorgaben individuell gesteuert betreibt.

Speichermittel und Mikroprozessor der Eingabeeinheit 3 sind geeignet, eine virtuelle Benutzerschnittstelle 6 auf dem Bildschirm 2 der Eingabeeinheit 3 darzustellen, welche eine Auswahl einer Steuerungsvorgabe und/oder die Veränderung eines oder mehrerer der zum Verfahren beispielhaft erwähnten Parameter einer oder mehrerer Lichtfunktionen erlaubt.

Die Auswahl und/oder Veränderung erfolgt beispielsweise durch Betätigung eines virtuellen, auf dem Bildschirm 2 dargestellten Schalters 7 oder Schiebereglers. Die Betätigung kann beispielsweise durch Mausklick oder ähnliches oder etwa bei einem berührungsempfindlichen Bildschirm durch Fingertippen erfolgen.

Die Fahrzeugleuchte 4 kann einen im Wesentlichen von einem Leuchtengehäuse und einer Lichtscheibe umschlossenen Leuchteninnenraum umfassen und mindestens ein darin beherbergtes, wenigstens eine Lichtquelle umfassendes Leuchtmittel für zumindest eine Lichtfunktion 5 der Fahrzeugleuchte 4.

Die Steuerungseinheit mit ihren Speichermitteln und dem Mikroprozessor kann zumindest zum Teil in dem Leuchteninnenraum beherbergt sein.

Die Steuerungseinheit ist mit den Leuchtmitteln der Fahrzeugleuchte 4 derart verbunden, dass sie die individuell ansteuerbaren Lichtquellen eines oder mehrerer zur Erfüllung mindestens einer Lichtfunktion der Fahrzeugleuchte 4 vorgesehenen Leuchtmittel der Fahrzeugleuchte 4:
- zur Übernahme der durch die jeweilige Steuerungsvorgabe festgelegten Parameter gebildeten Einstellungen bei Aktivierung mindestens einer entsprechenden Lichtfunktion 5 veranlasst,
und/oder
- zur Aktivierung mindestens einer entsprechenden Lichtfunktion entsprechend der durch die jeweilige Steuerungsvorgabe festgelegten Parameter gebildeten Einstellungen veranlasst.

Die Übernahme der Parameter erfolgt hierbei bei äußerem Anstoß zur Aktivierung der Lichtfunktion, etwa durch Betätigung eines entsprechenden Schalters der App, oder durch ein Fahrzeugsteuersignal, welches die Aktivierung einer Lichtfunktion veranlasst.

Die Aktivierung der entsprechenden Lichtfunktion durch die Parameter erfolgt beispielsweise bei eine Verknüpfung mit einem Signal erzeugenden Parametern durch Vorliegen des entsprechenden Signals.

Durch die fahrzeugleuchtenseitige Speicherung einer Steuerungsvorgabe für eine Lichtfunktion werden die durch die jeweilige Steuerungsvorgabe festgelegten Parameter als Einstellung für die jeweilige Lichtfunktion bei jeder Aktivierung der entsprechenden Lichtfunktion abgerufen und oder die jeweilige Lichtfunktion entsprechend der Einstellung aktiviert.

Dabei können die Speichermittel der Steuerungseinheit in der Fahrzeugleuchte einen geschützten Bereich umfassen, innerhalb dem Prioritäts-Steuerungsvorgaben abgelegt sein können, die beispielsweise immer dann abgerufen werden können, wenn ein fahrzeugseitiges Aktivierungssignal die Notwendigkeit einer Aktivierung einer Lichtfunktion anzeigt. Die Prioritäts-Steuerungsvorgaben enthalten vorzugsweise Parameter, welche den Betrieb der Lichtquellen der zur Erfüllung der Lichtfunktionen vorgesehenen Leuchtmittel entsprechend der gesetzlichen Vorgaben für die Lichtfunktionen steuern.

Demnach ist denkbar, dass die in der Eingabeeinheit festgelegten Steuerungsvorgaben bei ruhendem Fahrzeug benutzt werden, wohingegen die Prioritäts-Steuerungsvorgaben immer dann zum Einsatz kommen, wenn die Aktivierung einer Lichtfunktion fahrzeugseitig angefordert wird.

In diesem Zusammenhang ist denkbar, dass die Eingabeeinheit eine Art Schlüssel für das Fahrzeug bilden kann. Nähert sich die Eingabeeinheit dem Fahrzeug und damit auch der Fahrzeugleuchte an und sehen in einer ausgewählten Steuerungsvorgabe festgelegte Parameter eine Aktivierung mindestens einer Lichtfunktion bei Annäherung an die Fahrzeugleuchte vor, so stellt dies einen äußeren Anstoß dar. Dabei kann gleichzeitig mit der Annäherung an das Fahrzeug dieses entriegelt werden.

Die Sende- und Empfangseinrichtung bedient sich bevorzugt einer Funkstrecke zur Übertragung von Steuerungsvorgaben. Dies ist in Verbindung mit einer Schlüsselfunktion besonders vorteilhaft. Auch zur Verwirklichung einer LichtorgelFunktion ist dies vorteilhaft, insbesondere wenn das durch Parameter einer ausgewählten Steuerungsvorgabe verknüpfte Musiksignal von einer von einem Smartphone oder Tablet mit darauf installierter App umfassten Eingabeeinheit abgespielt wird. Dabei ist unerheblich, ob das Musiksignal in der Folge von dem Smartphone oder Tablet selbst in akustische Musikwiedergabe umgesetzt wird, oder ob dies über ein fahrzeugeigenes Soundsystem, oder über eine separate, beispielsweise tragbare Musikanlage erfolgt.

Die Übertragung kann sich eines Übertragungsstandards für drahtlose Kommunikation bedienen, wie etwa Bluetooth.

Gemäß einer bevorzugten Ausgestaltung der Erfindung handelt es sich bei der Eingabeeinheit um ein Mobiltelefon, insbesondere ein Smartphone oder um einen tragbaren Computer, wie etwa um ein Tablet oder ein Laptop, oder um einen Arbeitsplatzcomputer. Besonders bevorzugt ist auf dem Mobiltelefon, insbesondere ein Smartphone oder um einen tragbaren Computer, wie etwa um ein Tablet oder ein Laptop eine App installiert, welche die Darstellung der Benutzerschnittstelle auf dem Bildschirm des jeweiligen Geräts erzeugt. In diesem Fall umfasst das entsprechende Gerät mit darauf installierter App die Eingabeeinheit.

Alternativ oder zusätzlich kann es sich bei der Eingabeeinheit um eine integrierte Einheit am Fahrzeugschlüssel oder eine separate Fernbedienung, beispielsweise ähnlich einer Fernbedienung für eine Standheizung, handeln.

Die Eingabeeinheit ist vorteilhaft mit dem Internet verbindbar.

Über das Internet können beispielsweise besonders aufwändige Animationen der Lichtfunktionen steuernde Steuerungsvorgaben heruntergeladen und/oder übertragen werden. Diese können zuvor selbst erstellt und/oder bearbeitet und/oder vorkonfiguriert beispielsweise erwerbbar sein.

Vorzugsweise ist die Sende- und Empfangseinrichtung zur Übertragung von Computerprogrammprodukten geeignet, welche in den Speichermitteln der Vorrichtung gespeichert die Mikroprozessoren der Vorrichtung zur Ausführung eines voranstehend beschriebenen Verfahrens durch die Vorrichtung veranlassen. Dies ist insbesondere bei Smartphones und Tablets sowie Laptops und Computern gegeben, auf denen eine entsprechende App installiert ist, um die Eingabeeinheit zu bilden. Durch die Verbindungsmöglichkeit mit dem Internet können vorbereitete Steuerungsvorgaben geladen und auch selbst erzeugte Steuerungsvorgaben beispielsweise mit Freunden geteilt werden.

Das ebenfalls einen Gegenstand der Erfindung darstellende, erwähnte Computerprogrammprodukt ist vorteilhaft auf einem computerlesbaren Medium speicherbar. Es umfasst computerlesbare Programmmittel, welche in Speichermitteln einer Vorrichtung 1 gespeichert die Vorrichtung 1 und/oder mindestens einen Mikroprozessor der Vorrichtung dazu veranlasst, ein voranstehend beschriebenes Verfahren zur veränderlichen Steuerung wenigstens einer Lichtfunktion einer Fahrzeugleuchte durchzuführen, wenn das Programm von der Vorrichtung 1 und/oder mindestens einem Mikroprozessor der Vorrichtung 1 ausgeführt wird.

Zusammengefasst sieht die Erfindung eine Bereitstellung einer Möglichkeit zur Individualisierung der Lichtfunktionen von Fahrzeugleuchten durch einen Endkunden vor, um dem Trend nach Individualisierung nachzukommen.

Gemäß diesem Trend steigt der Wunsch des Endkunden zunehmend sein Fahrzeug zu individualisieren. Dieser Trend wird durch eine erfindungsgemäße Erweiterung der in diesem Dokument auch als Automobilleuchte bezeichneten Fahrzeugleuchte durch eine geeignete Schnittstelle aufgegriffen.

Eine Möglichkeit bieten dabei Leuchtenanimationen, wie etwa sogenannte Coming Home oder Welcome Home und Leaving Home Animationen und Lichtszenarien der Lichtfunktionen der Fahrzeugleuchten. Für die Umsetzung solcher Animationen wird eine Recheneinheit, wie etwa ein Computerprozessor, ein Mikrocontroller oder ein Field Programmable Gate Array (FPGA) oder ein Application-Specific Integrated Circuit (ASIC) benötigt.

An dieser Stelle wird nochmals hervorgehoben, dass der Begriff Mikroprozessor im vorliegenden Dokument stellvertretend ist für einen Computerprozessor oder eine Rechnereinheit verwendet wird.

Für die heutzutage bereits in Verbindung mit dynamischen Lichtfunktionen verwirklichten Animationen von Lichtfunktionen ist ein solcher Mikrocontroller außerhalb der Fahrzeugleuchte untergebracht, typischerweise im Steuergerät des Fahrzeugs. Der Mikrocontroller ermöglicht die Ansteuerung einzelner Lichtquellen, meist zusammengefasst in LED-Strängen.

Aktuelle Automobilleuchten besitzen bereits eine komplexe elektronische Schaltung, welche es ermöglicht, auf einzelne Lichtfunktionen und sogar auf einzelne Lichtquellen der Funktionen, insbesondere LED-Stränge, zuzugreifen. Hierfür kommt ein Mikrocontroller zum Einsatz, welcher Informationen vom Fahrzeugsteuergerät verarbeitet und entsprechende Animationen initiieren kann. Wäre dieser Speicher durch den Endkunden konfigurierbar, so könnten neue Animationsabläufe auf die Automobilleuchte aufgespielt werden.

Hierfür wird jedoch zusätzlich eine Schnittstelle zwischen Automobilleuchte und Endkunde benötigt, bevorzugt eine direkte Schnittstelle zwischen Mikrocontroller der Automobilleuchte und einer Eingabeeinheit beispielsweise des Endkunden, beispielsweise einem mobilen Gerät, wie etwa Smartphone, Tablet, Laptop. Als Schnittstelle eignet sich zudem eine Luftschnittstelle besonders, welche beispielsweise mit dem Bluetooth-Standard realisiert werden kann. Die Idee ist somit das Integrieren einer Funkschnittstelle in der Automobilleuchte, bevorzugt einer Heckleuchte, welche eine direkte Kommunikation und Datenaustausch zwischen Automobilleuchte und Endkunde ermöglicht. Dabei kann die Kommunikation als eine serielle Verbindung zwischen den beiden Funkschnittstellen aufgebaut werden.

Werksseitig werden zur Verwirklichung von Animationen dynamischer Lichtfunktionen Parameter in so genannten Animationstabellen auf dem Speicher des Mikrocontrollers oder in einem zusätzlichen Speicherbaustein (externer EEPROM) hinterlegt, welche mit entsprechender Verschaltung und Ansteuerung der Lichtquellen Animationen ablaufen lassen können.

Aufgrund der festen Hinterlegung ist eine nachträgliche Änderung der Animationstabellen und damit des Animationsablaufes, insbesondere durch den Endkunden, unmöglich.

Aktuelle Schnittstellen zwischen Endkunde und Automobilleuchte verfügen lediglich über einen eingeschränkten Zugriff, da die Kommunikation ausschließlich über das Fahrzeugsteuergerät erfolgt.

Die erfindungsgemäße Idee greift diesen Umstand auf und soll dem Wunsch nach erweiterter Individualisierung der Automobilleuchte, insbesondere der Heckleuchte, durch den Endkunden nachkommen.

Mittels einer speziell für die Kommunikation entwickelten App für beispielsweise eine mobiles Gerät des Endkunden, wie etwa Smartphone, Tablet, Laptop, werden erweiterte Individualisierungsmöglichkeiten eröffnet, beispielsweise das Erzeugen und Aufspielen neuer Animationstabellen in den Speichermitteln der Automobilleuchte, bevorzugt dem Flash oder EEPROM-Speicher des Mikrocontrollers oder einem zusätzlichen EEPROM-Baustein. Seitens Anwender wird diese Applikation auf einer Eingabeeinheit installiert, beispielsweise einem Smartphone, Tablet oder Computer. Das kurz auch als App bezeichnete Programm und insbesondere die eigens erstellen Animationsabläufe können insbesondere auf Datenspeichern wie CD, DVD, Blu-ray Disc, Ultra Density Optical (UDO), Speicherstick, Flashspeicher, Computerdiskette, Festplatte, RAM und/oder der Cloud abgelegt werden.

Ebenfalls ist das Teilen und Veröffentlichen der eigens erstellten Animationsabläufe insbesondere über das Internet beispielsweise in einer Community denkbar.

Mittels der Funktechnologie können auch mehrteilige Fahrzeugleuchten, wie etwa Seitenwandleuchte und Heckdeckelleuchte oder Heckleuchten und Scheinwerfer gleichzeitig oder nahezu gleichzeitig angesprochen werden. Falls es hier Einschränkungen bei einer Technologie gibt, beispielsweise bei einem Versuch eine Bluetoothverbindung mit mehreren Geräten gleichzeitig zu realisieren, kann mittels eines Signalrepeaters oder eines Signalweiterverarbeitungssystems ein entsprechendes Signal an die weiteren Leuchten gesandt werden. In diesem Fall würde eine Leuchte einen Empfänger und ggf. einen oder mehrere Sendemodule oder alternativ Sende- und Empfangsmodule zur Bestätigung der Verbindung und der erhaltenen Daten zur anderen Leuchte enthalten mit denen Signale von der App aufgenommen und gegebenenfalls an weitere Leuchten weitergegeben werden können.

Wichtig ist bei einer Anpassung von Animationen in einer Leuchte, dass die funktionale Sicherheit der Leuchte stets und zu keinem Zeitpunkt - insb. im Fahrbetrieb - beeinträchtigt ist. Alle Lichtfunktionen, wie etwa Schlusslichtfunktion, Bremslichtfunktion, durch eine Wiederholblinklichtfunktion verwirklichte Fahrtrichtungsanzeige, Nebelschlusslichtfunktion, Rückfahrscheinwerferfunktion (SL, BRL, FRA, NSL, RFS, etc.) müssen für das Fahrzeug weiterhin und ohne Einschränkungen verfügbar sein. Dies wird erfindungsgemäß hardwaremäßig in der Leuchte und/oder softwaremäßig durch die App sichergestellt, etwa durch Abrufen von in den Speichermitteln der Fahrzeugleuchte gespeicherten, mit ihren Parametern die Erfüllung von gesetzlichen Vorgaben bei der Verwirklichung der durch sie gesteuerten Lichtfunktionen sicherstellenden Steuerungsvorgaben.

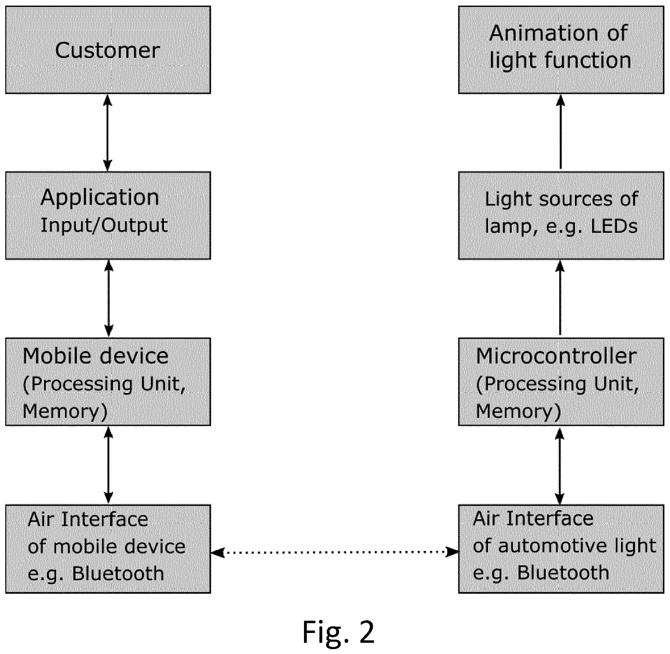

Fig. 2 zeigt schematisch ein Ausführungsbeispiel eines möglichen Informationsflusses zwischen einem Benutzer der Eingabeeinheit und der als Automobilleuchte ausgeführten Fahrzeugleuchte. Dabei erfolgt die Benutzereingabe über eine speziell für die Anwendung programmierte App. Ebenfalls können beispielsweise leuchtenspezifischen Daten wie Temperatur und Betriebsdauer über die App ausgegeben werden.

Die App ist auf einem Computer oder bevorzugt einem mobilen Gerät, wie Smartphone oder Tablet installiert, wodurch entsprechende Benutzereingaben verarbeitet und weitergeleitet werden können. Außerdem besitzt insbesondere ein Smartphone bereits verschiedene Funkschnittstellen wie WLAN, Bluetooth, NFC, Infrarot und weitere. Als besonders geeignet hat sich der Bluetooth-Standard etabliert, da dieser günstig, weit verbreitet und ausreichend Reichweite (abhängig von der Klasse aktuell bis über 100 m im Freien) und Übertragungsgeschwindigkeit aufweist.

Sofern die Automobilleuchte ebenfalls mit einer Funkschnittstelle ausgestattet ist, im Beispiel aus Fig. 2 mit einer Bluetooth-Schnittstelle, kann das Smartphone mit der automobilen Leuchte, insbesondere einer Heckleuchte, verbunden werden. Diese Verbindung kann seriell und somit bidirektional Daten austauschen.

Innerhalb der Automobilleuchte wird das Schnittstellenmodul mit der Mikrocontrollereinheit verbunden um die empfangenden Daten auswerten zu können. Vom Mikrocontroller erfolgt dann die entsprechende Ansteuerung der Leuchtenfunktionen bis hin zum gezielten Schalten einzelner LEDs und LED-Stränge. Somit ergibt sich der gewünschte sichtbare Animationsablauf für den Endkunden.

Eine erfindungsgemäße Vorrichtung zur veränderlichen Steuerung von Lichtfunktionen einer Fahrzeugleuchte umfasst eine Bildschirm, Speichermittel und eine kurz auch als Mikroprozessor bezeichnete Recheneinheit umfassende Eingabeeinheit sowie eine Fahrzeugleuchte mit einer Speichermittel und eine ebenfalls kurz auch als Mikroprozessor bezeichnete Recheneinheit umfassenden Steuerungseinheit.

Die Eingabeeinheit umfasst hierbei den Computer oder das mobile Gerät, auf dem die App installiert ist oder wird von diesem umfasst.

Die Steuerungseinheit der Fahrzeugleuchte umfasst hierbei die zuvor erwähnte Mikrocontrollereinheit. Die Microcontrollereinheit kann von einem Mikroprozessor der Steuerungseinheit ganz oder teilweise umfasst sein oder diesen ganz oder teilweise umfassen.

Die Vorrichtung zur veränderlichen Steuerung von Lichtfunktionen einer Fahrzeugleuchte umfasst darüber hinaus eine Sende- und Empfangseinrichtung zumindest zur drahtlosen Übertragung von Steuerungsvorgaben von der Eingabeeinheit an die Steuerungseinheit der Fahrzeugleuchte.

Die Sende- und Empfangseinrichtung der erfindungsgemäßen Vorrichtung umfasst hierbei bevorzugt ganz oder teilweise das zuvor erwähnte Schnittstellenmodul und/oder wird von diesem ganz oder teilweise umfasst.

Die Steuerungseinheit der Fahrzeugleuchte ist mit mindestens einem zur Erfüllung einer Lichtfunktion der Fahrzeugleuchte vorgesehenen Leuchtmittel mit mehreren Lichtquellen derart verbunden, dass die Steuerungseinheit den individuellen Betrieb der Lichtquellen bei Aktivierung der entsprechenden Lichtfunktion gemäß durch eine in den Speichermitteln zumindest kurzzeitig gespeicherte Steuerungsvorgabe vorgegebene Parameter steuert und/oder die Lichtquellen gemäß durch eine in den Speichermitteln zumindest kurzzeitig gespeicherte Steuerungsvorgabe vorgegebene Parameter bei Vorliegen der gemäß der Parameter definierten Vorgaben individuell gesteuert betreibt.

Die in den Speichermitteln zumindest kurzzeitig gespeicherten Steuerungsvorgaben steuern die Lichtquellen der zur Verwirklichung von Lichtfunktionen vorgesehenen Leuchtmittel der Fahrzeugleuchte so, dass sich ein durch die Steuerungsvorgaben festgelegter Animationsablauf ergibt.

Speichermittel und Mikroprozessor der Eingabeeinheit sind geeignet, insbesondere durch Ausführen wenigstens eines Teils eines durch eine App verwirklichten Computerprogrammprodukts eine virtuelle Benutzerschnittstelle auf dem Bildschirm der Eingabeeinheit darzustellen, welche eine Auswahl einer Steuerungsvorgabe und/oder die Veränderung eines oder mehrerer der zum Verfahren beispielhaft erwähnten Parameter einer oder mehrerer Lichtfunktionen erlaubt.

Die Auswahl und/oder Veränderung erfolgt beispielsweise durch Betätigung eines virtuellen, auf dem Bildschirm innerhalb einer durch die App erzeugten Benutzerschnittstelle dargestellten Schalters oder Schiebereglers. Die Betätigung kann beispielsweise durch Mausklick oder ähnliches oder etwa bei einem berührungsempfindlichen Bildschirm durch Fingertippen erfolgen.

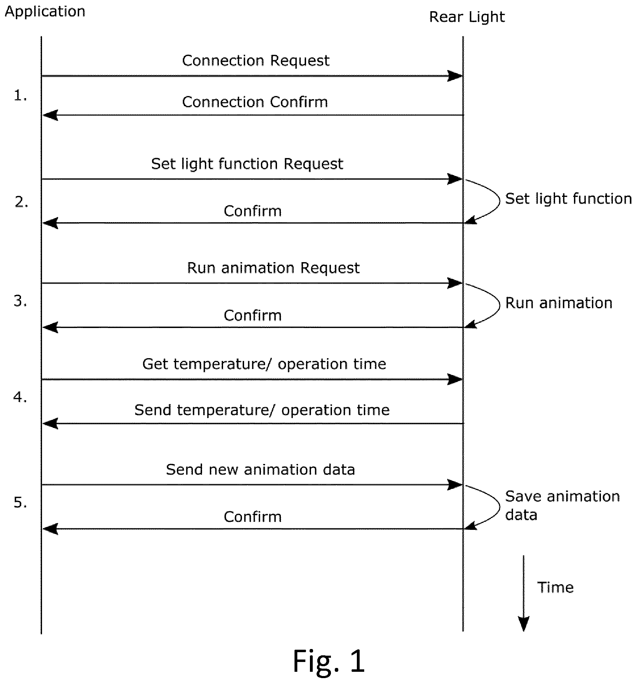

Ein denkbarer Kommunikationsverlauf zwischen einem Benutzer der Eingabeeinheit bzw. einer von der Eingabeeinheit aus bedienbaren App und der als Automobilleuchte ausgeführten Fahrzeugleuchte, hier insbesondere als Heckleuchte ausgeführt und zum Teil auch als solche bezeichnet, ist in Fig. 1 dargestellt. Zuerst wird eine Verbindung zwischen der beispielsweis durch ein mobiles Gerät verwirklichten Eingabeeinheit und der Automobilleuchte hergestellt. Bei erfolgreicher Authentifizierung, die gegebenenfalls passwortgeschützt sein kann, wird eine Verbindungsbestätigung von der Fahrzeugleuchte zu der Eingabeeinheit, beispielsweise einer auf der Eingabeeinheit installierten, die virtuelle Benutzerschnittstelle verwirklichenden App gesandt. Nun können verschiedene Befehle durch den Endkunden über die App an die Automobilleuchte gesendet werden, wie beispielsweise das Ein- und Ausschalten einzelner Lichtfunktionen oder das Initiieren von Animationsabläufen für eine oder mehrere Lichtfunktionen. Leuchtenspezifische Daten wie Temperatur und Betriebsdauer können abgefragt und dem Endkunden angezeigt werden. Außerdem können neu generierte Animationsabläufe vom Endkunden auf die Fahrzeugleuchte gespielt und dauerhaft gespeichert werden. Zuletzt kann die Verbindung zwischen mobilen Endgerät und Automobilleuchte wieder getrennt werden.

Die in Fig. 1 gezeigte zeitliche Abfolge ist nicht fest vorgegeben, sondern kann auch in anderer Form erfolgen oder mit anderen hinterlegten Operationen. Die Ausführung ist somit abhängig von der Situation.

Weitere denkbare Szenarien sind:
- Individuell ansteuerbare Lichtfunktionen, wobei bevorzugt jeder LED-Strang und/oder jede einzelne LED innerhalb eines zur Verwirklichung einer Lichtfunktion vorgesehenen Leuchtmittels individuell ansteuerbar ist.
- Geschwindigkeit des Animationsablaufes über App einstellbar.
- Helligkeit und/oder Farbtemperatur und/oder Farbsättigung der Lichtfunktionen über App konfigurierbar.
- Dauer der Animation einstellbar. Dabei ist die Kapazität des Speicherbausteines flexibel aufteilbar in eine oder mehrere Animationsabläufe.
- Informationen über Temperaturen in der Leuchte, bevorzugt an verschiedenen interessanten Stellen, in der App darstellbar. Erweiterbar auf die Darstellung des Temperaturverlaufes über der Zeit in einem Diagramm.
- Betriebsstundenzähler, bevorzugt für einzelne Leuchten Funktionen, in der App darstellbar.
- Leuchte in Echtzeit über App ansteuerbar.
- Ermöglicht Simulation der mit der App erstellten Animation, bevor Animationsablauf auf den Speicherbaustein in der Leuchte dauerhaft gespeichert wird.
- Spiele mit der Leuchte, wie etwa Nachspielen einer stetig zunehmenden Anzahl von Lichtfunktionsfolgen, beispielsweise indem eine Abfolge von an der Fahrzeugleuchte einzeln oder gruppenweise nacheinander erzeugten Lichtfunktionen beispielsweise durch Antippen mit den Fingern an den Lichtfenstern für die jeweiligen Lichtfunktionen an der Fahrzeugleuchte oder auf dem Bildschirm der Eingabeeinheit innerhalb eines die Leuchtflächen wiedergebenden, synchronisiertem Anzeigeprogramms in der richtigen Reihenfolge angetippt werden muss.
- Ansteuerung in Abhängigkeit eines akustischen Signals, wie etwa Stimme, Musik, Geräusche, etc.. Hierbei kann ein Mikrofon beispielsweise eines Mobiltelefons als zusätzliches Eingangssignal für die App verwendet werden und die Lichtfunktionen der Fahrzeugleuchte in Abhängigkeit von ihrer akustischen Umgebung angesteuert werden (akustisch gesteuerte "Discoleuchte").
- Ansteuerung in Abhängigkeit von einem elektrischen Signal, beispielsweise einem Sensorsignal oder einem zur Erzeugung einer Tonwiedergabe vorgesehenen Signal, etwa einem Lautsprechersignal. Damit können die Lichtfunktionen der Fahrzeugleuchte entsprechend einer Signalstärke angesteuert werden, entsprechend einer visuellen Darstellung einer Equalizerfunktion oder einer Signalstärkefunktion oder dergleichen.

Animationen sowie gegebenenfalls weitere Informationen können in einer Community beispielsweise über die Cloud geteilt, heruntergeladen und/oder bewertet werden.

Eine Erstellung von Benutzerkonten in der App für verschiedene Anwender/Endkunden ist denkbar. Hierdurch kann die Ansteuerung der Fahrzeugleuchte und somit die Ausfühlung der Lichtanimationen dann in Abhängig von der verbundenen App angepasst werden und individuell auf den jeweiligen Fahrer zugeschnitten werden, beispielsweise in Verbindung mit einer Ortung des zugehörigen Fahrzeugschlüssels zum Fahrzeug (Triangulation) im Vergleich zu dem Mobiltelefon, das verbunden wird.

Zusätzlich kann die Erfindung hilfreich sein bei Gewährleistungsfällen von Fahrzeugleuchten, beispielsweise in Verbindung mit Rückrufaktionen. Durch die zur erfindungsgemäßen, individuellen Ansteuerung der Lichtfunktionen der Fahrzeugleuchte erforderliche Sende- und Empfangseinrichtung können Daten ausgelesen werden ohne eine von außen sichtbare Schnittstelle an der Fahrzeugleuchte anbringen zu müssen. Letzteres wäre insbesondere im Hinblick auf eine Erhöhung der Gefahr des Eindringens von Schmutz und/oder Feuchtigkeit in die Fahrzeugleuchte nachteilig. Hierdurch ließe sich in einigen Fällen das Öffnen von Leuchten verhindern und die Fehlersuche beschleunigen und sogar automatisieren, einhergehend mit einer Kosten-, Zeit- und Ressourceneinsparung.

Zusätzlich könnte eine bessere Nachverfolgbarkeit von Fahrzeugleuchten und deren innenliegender Bauteilen erreicht werden. Hierdurch könnte von außen - ohne ein Öffnen und somit eine Zerstörung der Leuchte durchführen zu müssen - Daten ausgelesen werden, wie etwa welche Bauteile mit welchen Chargenbezeichnungen verbaut wurden, wenn diese Informationen vorher entsprechend in der Leuchte gespeichert wurden.

Diese Daten könnten auch speziell geschützt -vor unberechtigten Auslesen- in den Speichermitteln der Steuerungseinheit der Fahrzeugleuchte hinterlegt werden.

Auch könnten Benutzerdaten in der Fahrzeugleuchte hinterlegt werden. Mit einem speziellen Auslesesystem könnten so beispielsweise gestohlene Fahrzeuge aufgespürt werden, da eine derartige Personalisierung von Leuchten bisher unbekannt ist und somit zielführend hierfür genutzt werden könnte. Auch könnten diese Leuchten z. B. durch Garagentüren hindurch aufgespürt werden, auch wenn das mit der entsprechenden Leuchte ausgestattete Fahrzeug nicht sichtbar ist, sofern die Sende- und Empfangseinrichtung stromversorgt ist. Auch dies erhöht die Möglichkeit die Leuchte und somit das Fahrzeug aufzufinden.

Wichtig ist hervorzuheben, dass die Ansteuerung von Automobilleuchten und deren Funktionen ebenfalls über das Bordsteuergerät erfolgen kann. Ebenfalls kann ein Mikrocontroller über das Bordsteuergerät programmiert werden, um beispielsweise neue Animationen auf den Speicherbaustein in der Leuchte zu programmieren. Dies kann mittels eines Fahrzeugbussystem, wie etwa LIN-Bus erfolgen.

Ebenso wichtig ist hervorzuheben, dass die erfindungsgemäße Vorrichtung 1 und/oder das erfindungsgemäße Verfahren alternativ oder zusätzlich einzelne oder eine Kombination mehrerer einleitend in Verbindung mit dem Stand der Technik und/oder in einem oder mehreren der zum Stand der Technik erwähnten Dokumente und/oder in der voranstehenden Beschreibung und/oder in den noch folgenden Ansprüchen erwähnte Merkmale aufweisen können.

Darüber hinaus können das Verfahren und/oder die Vorrichtung 1 jeweils zu einem anderen Gegenstand der Erfindung erwähnte Merkmale aufweisen und/oder zur Verwirklichung entsprechend erwähnter Merkmale geeignete Verfahrensschritt und/oder Einrichtungen und/oder Mittel umfassen.

Zusätzlich wichtig ist hervorzuheben, dass die Erfindung Verfahrensschritte und/oder solche Verfahrensschritte ermöglichende und/oder umsetzende Mittel aufweisen kann, so dass Daten aus der Leuchte ausgelesen werden können, wie beispielsweise die Leuchtdauer der Funktionen und/oder der aktuell gemessenen Temperatur und/oder des Temperaturverlaufs. Diese Daten können zuvor in der Leuchte gespeichert werden.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 2: Bildschirm
- 3: Eingabeeinheit
- 4: Fahrzeugleuchte
- 5: Lichtfunktion
- 6: Benutzerschnittstelle
- 7: Schalter

- I: Verfahrensschritt
- II: Verfahrensschritt
- III: Verfahrensschritt
- IV: Verfahrensschritt
- V: Verfahrensschritt
- VI: Verfahrensschritt
- VII: Verfahrensschritt
- VIII: Verfahrensschritt
- IX: Verfahrensschritt
- X: Verfahrensschritt
- XI: Verfahrensschritt

- A: Pfeil
- B: Pfeil
- C: Pfeil
- D: Pfeil
- E: Pfeil
- F: Pfeil
- G: Pfeil
- H: Pfeil

## Patentansprüche

1. Verfahren zur veränderlichen Steuerung wenigstens einer Lichtfunktion (5) einer Fahrzeugleuchte (4) mit wenigstens einem eine oder mehrere Lichtquellen umfassenden, zur Verwirklichung zumindest einer Lichtfunktion der Fahrzeugleuchte vorgesehenen Leuchtmittel, wobei die Art und Weise des individuellen Betriebs der Lichtquellen bei der und/oder zur Aktivierung einer oder mehrerer Lichtfunktionen (5) durch Parameter vorgegeben wird, umfassend die Verfahrensschritte:
- Wiedergabe einer virtuellen Benutzerschnittstelle (6) auf einem Bildschirm (2) einer Eingabeeinheit (3),
- visuelle Darstellung von mindestens zwei verschieden Steuerungsvorgaben für wenigstens eine Lichtfunktion (5) der Fahrzeugleuchte (4) innerhalb der Wiedergabe der Benutzerschnittstelle (6) auf dem Bildschirm (2), wobei die verschiedenen Steuerungsvorgaben unterschiedliche Voreinstellungen für jeweils einen oder mehrere unterschiedliche Parameter aufweisen,
- Auswahl einer der dargestellten Steuerungsvorgaben für zumindest eine Lichtfunktion durch Betätigung mindestens eines virtuellen, auf dem Bildschirm dargestellten Schalters (7),
- Übertragung zumindest der durch die jeweilige ausgewählte Steuerungsvorgabe festgelegten Parametern von der Eingabeeinheit (3) an die Fahrzeugleuchte (4),
- Zumindest zeitweilige Speicherung der übertragenen, durch die Auswahl einer Steuerungsvorgabe für eine Lichtfunktion festgelegten Parameter in einer Steuerungseinheit der Fahrzeugleuchte (4), und
- Abrufen der übernommenen, gespeicherten Parameter beim Aktivieren der jeweiligen Lichtfunktion (5),
und/oder
- Aktivierung der jeweiligen Lichtfunktion (5) entsprechend der übernommenen, gespeicherten Parameter bei Vorliegen von den übernommenen, gespeicherten Parametern entsprechenden Voraussetzungen.

2. Verfahren nach Anspruch 1, wobei die verschiedenen Steuerungsvorgaben Voreinstellungen eines oder mehrerer Parameter umfassen und/oder die Vornahme von Voreinstellungen eines oder mehrerer Parameter erlauben.

3. Verfahren nach Anspruch 2, wobei das Verfahren vorsieht, zumindest eine Steuerungsvorgabe bereitzuhalten, welche eine individuelle Festlegung eines oder mehrerer der Parameter vorzunehmen erlaubt.

4. Verfahren nach Anspruch 1, 2 oder 3, wobei die Parameter individuelle Leuchtdauer und/oder individuelle Leuchtstärke und/oder individuelle Wiederholfrequenz und/oder individuelle Wiederholungsanzahl und/oder individuelle Einschaltverzögerung der Lichtquellen eines oder mehrerer, zur Verwirklichung einer oder mehrerer Lichtfunktionen vorgesehener Leuchtmittel der Fahrzeugleuchte umfassen.

5. Verfahren nach einem der Ansprüche 1 bis 4, wobei die Parameter eine Verknüpfung des Betriebs einer oder mehrerer Lichtquellen mit einem Signal und/oder die Empfindlichkeit einer solchen Verknüpfung umfassen.

6. Verfahren nach einem der voranstehenden Ansprüche, wobei die Betätigung mindestens eines virtuellen, auf dem Bildschirm dargestellten Schalters durch Mausklick oder durch Fingertippen erfolgt.

7. Verfahren nach einem der voranstehenden Ansprüche, wobei die Übertragung von der Eingabeeinheit an die Fahrzeugleuchte drahtlos erfolgt.

8. Verfahren nach einem der voranstehenden Ansprüche, wobei es vorsieht, wenn ein mit der Fahrzeugleuchte ausgestattetes Fahrzeug am fließenden Verkehr teilnimmt und/oder zur Teilnahme am fließenden Verkehr bereit ist, für alle Lichtfunktionen der Fahrzeugleuchte in der Steuerungseinheit der Fahrzeugleuchte gespeicherte Steuerungsvorgaben aktiviert werden, deren Parameter den Betrieb der Lichtquellen der zur Erfüllung der Lichtfunktionen vorgesehenen Leuchtmittel entsprechend der gesetzlichen Vorgaben für die Lichtfunktionen steuern.

9. Verfahren nach Anspruch 8, wobei es nach jeder Teilnahme eines mit der Fahrzeugleuchte ausgestatteten Fahrzeugs am fließenden Verkehr und/oder nach jeder Bereitschaft eines mit der Fahrzeugleuchte ausgestatteten Fahrzeugs zur Teilnahme am fließenden Verkehr eine erneute Auswahl einer Steuerungsvorgabe, deren Parameter den Betrieb der Lichtquellen der zur Erfüllung einer oder mehrerer Lichtfunktionen vorgesehenen Leuchtmittel abweichend von den der gesetzlichen Vorgaben für die Lichtfunktionen steuern, bedarf.

10. Verfahren nach Anspruch 8, wobei es nach jeder Teilnahme eines mit der Fahrzeugleuchte ausgestatteten Fahrzeugs am fließenden Verkehr und/oder nach jeder Bereitschaft eines mit der Fahrzeugleuchte ausgestatteten Fahrzeugs zur Teilnahme am fließenden Verkehr wieder die Verwendung der zuletzt an der Eingabeeinheit ausgewählten Steuerungsvorgabe vorsieht.

11. Verfahren nach einem der voranstehenden Ansprüche, wobei es eine Aktivierung einer oder mehrerer Lichtfunktionen unter Anwendung der Parameter einer oder mehrerer in den Speichermitteln der Steuerungseinheit gespeicherter Steuerungsvorgaben durch einen von der Eingabeeinheit an die Steuerungseinheit übertragenen Aktivierungsbefehl vorsieht.

12. Vorrichtung umfassend eine Bildschirm, Speichermittel und Recheneinheit umfassende Eingabeeinheit sowie eine Fahrzeugleuchte mit Speichermittel und Recheneinheit umfassender Steuerungseinheit, wobei sie eine Sende- und Empfangseinrichtung zumindest zur drahtlosen Übertragung von Steuerungsvorgaben von der Eingabeeinheit an die Steuerungseinheit umfasst, und wobei die Steuerungseinheit mit mindestens einem zur Erfüllung einer Lichtfunktion der Fahrzeugleuchte vorgesehenen Leuchtmittel mit mehreren Lichtquellen derart verbunden ist, dass die Steuerungseinheit den individuellen Betrieb der Lichtquellen bei Aktivierung der entsprechenden Lichtfunktion gemäß durch eine in den Speichermitteln zumindest kurzzeitig gespeicherte Steuerungsvorgabe vorgegebene Parameter steuert und/oder die Lichtquellen gemäß durch eine in den Speichermitteln zumindest kurzzeitig gespeicherte Steuerungsvorgabe vorgegebene Parameter bei Vorliegen der gemäß der Parameter definierten Vorgaben individuell gesteuert betreibt.

13. Vorrichtung nach Anspruch 12, wobei es sich bei der Eingabeeinheit um ein Mobiltelefon oder um einen tragbaren Computer oder um einen Arbeitsplatzcomputer handelt.

14. Vorrichtung nach Anspruch 12 oder 13, wobei die Eingabeeinheit mit dem Internet verbindbar ist.

15. Computerprogrammprodukt, welches auf einem computerlesbaren Medium speicherbar ist, umfassend computerlesbare Programmmittel, welche in Speichermitteln einer Vorrichtung nach einem der Ansprüche 12 bis 14 gespeichert die Vorrichtung und/oder mindestens eine Recheneinheit der Vorrichtung dazu veranlasst, ein Verfahren nach einem der Ansprüche 1 bis 11 durchzuführen, wenn das Programm von der Vorrichtung und/oder mindestens einer Recheneinheit der Vorrichtung ausgeführt wird.
